# EUROPÄISCHE PATENTSCHRIFT

(11) **EP 2 916 104 B1**
(45) Veröffentlichungstag und Bekanntmachung des Hinweises auf die Patenterteilung: **27.06.2018**
(21) Anmeldenummer: 14158265.0
(22) Anmeldetag: 07.03.2014
(51) Int. Cl.: G01C 15/00, G01C 15/06, G01C 25/00

(54) **Reflektoranordnung mit Retroreflektor sowie mit Sensoranordnung zur Neigungsbestimmung und Kalibrierung**
Reflector assembly with retroreflector and with sensor assembly for determining inclination and calibration
Dispositif de réflecteur avec rétroréflecteur et avec dispositif de capteurs pour la détermination d'inclinaison et l'étalonnage

(43) Veröffentlichungstag der Anmeldung: 09.09.2015
(73) Patentinhaber: Hexagon Technology Center GmbH, 9435 Heerbrugg (CH)
(72) Erfinder: Jensen, Thomas, CH-9400 Rorschach (CH); Siercks, Knut, CH-9402 Mörschwil (CH)
(74) Vertreter: Kaminski Harmann

(56) Entgegenhaltungen:
- EP-A1- 1 200 853
- EP-A1- 1 734 336
- EP-A1- 2 818 827
- DE-A1-102010 024 014
- DE-B3-102012 011 518
- US-A1- 2009 024 325
- US-B2- 7 106 431

## Beschreibung

Die Erfindung betrifft eine Reflektoranordnung zur Positionsbestimmung und/oder Markierung von Zielpunkten, insbesondere für die bautechnische bzw. geodätische Vermessung, nach dem Oberbegriff des Anspruchs 1, ein Kalibrierverfahren nach dem Oberbegriff von Anspruch 11 und ein Computerprogrammprodukt nach Anspruch 15.

Zum Vermessen eines Zielpunktes sind seit der Antike zahlreiche Vermessungsgeräte bekannt. Als räumliche Standarddaten werden dabei Richtung bzw. Winkel und meist auch eine Entfernung von einem Messgerät zum zu vermessenden Zielpunkt aufgenommen sowie insbesondere die absolute Position des Messgerätes nebst eventuell vorhandenen Bezugspunkten erfasst.

Allgemein bekannte Beispiele für geodätische Vermessungsgeräte stellen Theodolit, Tachymeter und Totalstation, die auch als elektronischer Tachymeter oder Computer-Tachymeter bezeichnet wird, dar. Eine geodätische Messvorrichtung des Stands der Technik ist beispielsweise in der Veröffentlichungsschrift EP 1 686 350 beschrieben. Derartige Geräte verfügen über elektrosensorische Winkel- und ggf. Distanzmessfunktion, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

Bezüglich der Ausgestaltung der Vermessungsgeräte sind zahlreiche unterschiedliche Ausführungsformen bekannt. So verfügen z.B. moderne Totalstationen über Mikroprozessoren zur digitalen Weiterverarbeitung und Speicherung erfasster Messdaten. Die Geräte weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie - im Fall der Verwendung von Retroreflektoren (etwa eines Rundum-Prismas) als Ziel-Objekte - Mittel zur automatischen Zielsuche und -verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z.B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können weiters über eine Funkdatenschnittstelle verfügen zum Aufbau einer Funkverbindung zu externen Peripheriekomponenten wie z.B. zu einem handhaltbaren Datenerfassungsgerät, welches insbesondere als Datenlogger oder Feldrechner ausgebildet sein kann.

Zum Anvisieren bzw. Anzielen des zu vermessenden Zielpunkts weisen gattungsgemässe geodätische Vermessungsgeräte ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers - dargestellt werden kann. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z.B. durch Servomotoren erfolgt. Beispielsweise ist eine solche Visiereinrichtung eines geodätischen Vermessungsgeräts in der EP 2 219 011 beschrieben. Automatische Fokussiereinrichtungen für Zielfernrohre geodätischer Geräte sind z.B. aus der DE 197 107 22, der DE 199 267 06 oder der DE 199 495 80 bekannt. Der Aufbau von gattungsgemässen Zielfernrohren von geodätischen Geräten ist in den Veröffentlichungsschriften EP 1 081 459 oder EP 1 662 278 gezeigt.

Gängige geodätische Vermessungsgeräte weisen inzwischen standardmässig eine automatische Zielverfolgungs-Funktion für als Ziel-Reflektor dienende Prismen (ATR: "Automatic Target Recognition") auf. Dafür sind beispielsweise eine weitere separate ATR-Lichtquelle und ein spezieller, für diese Wellenlänge sensitiver ATR-Detektor (z.B. CCD-Flächensensor) zusätzlich im Teleskop integriert.

Zudem sind Messgeräte bekannt, die speziell für eine fortlaufende Verfolgung eines Zielpunkts und eine koordinative Positionsbestimmung dieses Punkts ausgebildet sind. Diese können allgemein, insbesondere im technischen Gebiet der industriellen Vermessung, unter dem Begriff "Lasertracker" zusammengefasst werden. Ein Zielpunkt kann dabei durch eine retro-reflektierende Einheit (z.B. Würfelprisma) repräsentiert sein, die mit einem optischen Messstrahl der Messvorrichtung, insbesondere einem Laserstrahl, angezielt wird. Der Laserstrahl wird parallel zurück zum Messgerät reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von dem Messgerät zum Zielpunkt, z.B. mittels Laufzeit- oder Phasendifferenzmessung, ermittelt.

Bezüglich der Ausgestaltung von Lasertrackern als Vermessungsgeräte, weisen moderne Trackersysteme - zunehmend standardisiert - einen Sensor zur Ermittlung einer Ablage des empfangenen Messstrahls von einem so genannten Servokontrollpunkt auf. Mittels dieser messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Sensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Vermessungsgerät bestimmt werden. Das Nachführen kann dabei mittels einer gesteuerten Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Zur Entfernungsmessung weisen Lasertracker des Standes der Technik zumindest einen Distanzmesser auf, wobei dieser z.B. als Interferometer ausgebildet sein kann. Da solche Entfernungsmesseinheiten nur relative Distanzänderungen messen können, werden in heutigen Lasertrackern zusätzlich zu Interferometern so genannte Absolutdistanzmesser verbaut. Beispielsweise ist eine derartige Kombination von Messmitteln zur Entfernungsbestimmung durch das Produkt AT901 der Leica Geosystems AG bekannt. Die in diesem Zusammenhang für die Distanzmessung eingesetzten Interferometer verwenden hauptsächlich - aufgrund der grossen Kohärenzlänge und der damit ermöglichten Messreichweite - Gaslaser als Lichtquellen, insbesondere HeNe-Gaslaser. Die Kohärenzlänge des HeNe-Lasers kann dabei einige hundert Meter betragen, so dass mit relativ einfachen Interferometer-Aufbauten die in der industriellen Messtechnik geforderten Reichweiten erzielt werden können. Eine Kombination eines Absolutdistanzmessers und eines Interferometers zur Entfernungsbestimmung mit einem HeNe-Laser ist beispielsweise aus der WO 2007/079600 A1 bekannt.

In vielen geodätischen Anwendungen erfolgt eine Vermessung von Punkten, indem speziell ausgestaltete Zielobjekte (z.B. Vermessungsstäbe) am Zielpunkt platziert werden. Diese bestehen meist aus einem Lotstock mit einem Reflektor (z.B. einem Rundum-Prisma) zur Definition der Messtrecke bzw. des Messpunktes. Bei solchen Vermessungsaufgaben werden typischerweise zur Steuerung des Messvorgangs sowie zur Festlegung oder Registrierung von Messparametern Daten, Anweisungen, Sprache und weiteren Informationen zwischen Zielobjekt - insbesondere einem handhaltbaren Datenerfassungsgerät seitens des Zielobjekts - und zentralem Messgerät übertragen. Beispiele für solche Daten sind Identifikationsinformation für das Zielobjekt (z.B. Art des verwendeten Prismas), Neigung des Lotstocks, Höhe des Reflektors über Grund, Reflektorkonstanten oder Messwerte wie Temperatur oder Luftdruck. Diese Informationen bzw. situationsbedingten Parameter sind erforderlich, um eine hochpräzise Anzielung und Vermessung des durch den Lotstab mit Prisma definierten Messpunktes zu ermöglichen.

Auch in der industriellen Vermessung kommen speziell ausgestaltete Zielobjekte bzw. Messhilfsinstrumente zur Vermessung eines Messpunkts, insbesondere einer Mehrzahl von Messpunkten, zum Einsatz. Zu diesen Zielobjekten gehören berührungslos messende Sensoren (z.B. mobile optische Scaneinheiten) und auch so genannte Tastwerkzeuge, die mit ihrem Kontaktpunkt auf dem Messpunkt an einem Objekt positioniert werden und dadurch eine Vermessung dieses Zielpunktes erlauben.

Mittels eines Zusammenwirkens von einem oben genannten Messsystem mit einer jeweils eingesetzten Reflektoreinheit kann verlässlich und präzise die Position dieses Reflektors (am Messhilfsinstrument) bestimmt werden. Zur Messung eines oder mehrerer bestimmter Zielpunkte jedoch ist die Position des Reflektors allein zumeist nicht ausreichend, da der Reflektor nicht direkt den zu bestimmenden Zielpunkt angibt, sondern dieser Zielpunkt vermittels des Zielobjekts bzw. des Hilfsinstruments (z.B. Lotstock in der Geodäsie) vermessen wird.

Somit ist zusätzlich eine Bestimmung der räumlichen Orientierung bzw. einer Neigung bezüglich jeweils relevanter Raumrichtungen des jeweiligen Hilfsinstruments erforderlich, um zusammen mit der bestimmten Position des am Hilfsinstrument angeordneten Reflektors die mittels des Instruments zu bestimmende Position des Zielpunkts abzuleiten. Eine solche Orientierung kann beispielsweise mittels eines Neigungssensors oder einer IMU (Inertialmesseinheit), welche in einer bestimmten Position und Lage relativ zu dem Reflektor vorgesehen ist, oder - wie typischerweise für Lasertracker eingesetzt - mittels an dem Hilfsinstrument angeordneter Markierungen bestimmt werden, wobei die Positionen der Markierungen am Tastinstrument präzise bekannt sind und die Orientierung durch Bildverarbeitung eines Bildes bestimmt wird, in dem diese Markierungen mit Positionsbezug erfasst sind. Das Bild kann durch eine Bilderfassungseinheit seitens eines o.g. Vermessungsgeräts erfasst werden.

Nachteilig bei diesen Lösungen gemäss dem Stand der Technik ist zum einen die durch Neigungssensoren, die typischer weise als Flüssigkeitssensoren ausgeführt sind, oder durch die IMU, insbesondere aufgrund des Drifts der vorgesehenen Sensoren, gegebene limitierte Genauigkeit, insbesondere über einen grösseren Zeitraum hinweg, für die Neigungs- bzw. Orientierungsbestimmung. Des Weiteren bergen die zur Orientierungsbestimmung vorgesehenen Markierungen die zusätzliche Fehlerquelle, dass beispielsweise bei einer teilweisen Verdeckung einer oder mehrerer Markierungen eine entsprechende Orientierungsbestimmung zwar ggf. noch möglich ist, jedoch die Orientierung mit nur noch eingeschränkter Genauigkeit bestimmbar ist.

Auch eine Lösung gemäss der EP 1 200 853, wobei ein Prisma eine Durchtrittsfläche für den Messstrahl aufweist und dieser teilweise direkt auf einen Sensor trifft, weist aufgrund einer undefinierten Strahlführung und -formung hinsichtlich erreichbarer Genauigkeiten analoge Nachteile auf. Eine präzise Bestimmung der Position der Strahlung auf dem Sensor ist nur stark bedingt gegeben, da diese Bestimmungsgenauigkeit massgeblich von der Messdistanz und der Strahlqualität abhängt. Zudem ist der strukturelle Aufbau sehr komplex und raumbeanspruchend (Prisma vor dem Sensor oder Integration des Sensors in den Reflektor) ausgelegt. Auch können bei einer Distanzmessung zu dieser Einheit aufgrund strukturell bedingter, reflektorinterner Reflexionen erhebliche Messfehler bei der Distanzbestimmung zu dieser Einheit auftreten.

Die DE 10 2012 011 518 B3 beschreibt ein geodätisches Ziel mit einem Matrixsensor, dessen Empfangsfläche in einer Bildebene einer Abbildungsoptik angeordnet ist, welche einfallende Messstrahlen in einen Bildpunkt auf dem Matrixsensor fokussiert. Der Matrixsensor ist ausgebildet, eine Position des Bildpunktes innerhalb der Empfangsfläche zu bestimmen, so dass Anhand der Position des Bildpunktes innerhalb der Empfangsfläche des Matrixsensors mögliche Verdrehungen des geodätischen Ziels um Achsen bestimmt werden können, welche in einer Ebene liegen, welche mit der optischen Achse der Abbildungsoptik einen von Null verschiedenen Winkel einschließen.

Eine Aufgabe der vorliegenden Erfindung ist es daher, eine verbesserte, strukturell weniger komplexe Vorrichtung bereitzustellen, welche eine zuverlässigere und genauere Positions- und Orientierungsbestimmung, insbesondere mit bis zu sechs Freiheitsgraden (drei translatorische und drei rotatorische Freiheitsgrade), für Vermessungszwecke ermöglicht.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft in einer ersten Ausführungsform eine Reflektoranordnung zur Positionsbestimmung und/oder Markierung von Zielpunkten, insbesondere für die industrielle bzw. geodätische Vermessung, mit einem Retroreflektor zur Positionsbestimmung für die Reflektoranordnung mittels paralleler, insbesondere koaxialer, Strahlreflexion und einer Sensoranordnung, wobei die Sensoranordnung ein Codeelement mit Codemuster aufweist. Die Sensoranordnung weist zudem einen wenigstens bezüglich eines Wellenlängenbereichs sensitiven Sensor mit einer Empfangsrichtung orthogonal zu dessen Detektionsfläche auf, wobei das Codeelement und der Sensor mit einem definierten Abstand derart starr verbunden sind, dass mittels des Sensors eine bezüglich der Empfangsrichtung winkelabhängige Lage einer Projektion des Codemusters auf die Detektionsfläche bestimmbar ist.

Als Abstand zwischen Codeelement und Sensor wird in diesem Zusammenhang, also im Rahmen der vorliegenden Erfindung, ein geometrischer Abstand zwischen den beiden Elementen - Codeelement und Sensor - verstanden. Somit ist dadurch die tatsächliche strukturelle Beabstandung dieser Elemente, d.h. eine kürzeste Verbindung der Elemente, zu verstehen und definiert. Der Abstand kann beispielsweise repräsentiert sein durch die lineare Entfernung von der Grenzfläche des Codeelements bis zur gegenüberliegenden Grenzfläche des Sensors oder durch die Entfernung der jeweiligen Schwerpunkte der beiden Elemente.

Durch diese Anordnung des Codeelements relativ zum Sensor ist zudem ein optischer Abstand definiert, wobei hierzu zusätzlich der Brechungsindex n eines sich zwischen dem Codeelement (bzw. Codemuster) und dem Sensor befindenden Mediums (z.B. Luft oder Glas) berücksichtigt ist. Der optische Abstand ist dabei die geometrische Distanz L (geometrischer Abstand) dividiert durch den Brechungsindex n des Zwischenmediums (L/n). Der optische Abstand unterscheidet sich somit vom geometrischen Abstand in Abhängigkeit des vorliegenden Brechungsindex n des Zwischenmediums bzw. der mehreren Zwischenmedien (z.B. Luft und Glas) .

Der Abstand, der in Abhängigkeit jeweiliger Ausführungen für jeweilige Messanforderungen fix einstellbar ist, wirkt dabei wie ein Hebel auf die Verschiebung des projizierten Codes, wodurch sich die Empfindlichkeit der Sensoranordnung anpassen lässt.

Gemäss einer bestimmten Ausführungsform in Bezug auf diesen Aspekt der Erfindung sind die Empfangsrichtung des Sensors und eine Erstreckungsrichtung des Codeelements orthogonal zueinander ausgerichtet und der definierte Abstand beträgt mindestens 1 mm und maximal 10 mm, insbesondere wobei eine Erstreckungsrichtung des Sensors gleichgerichtet ist zur Erstreckungsrichtung des Codeelements.

Gemäss einer speziellen Ausführungsform bezüglich des ersten Aspekts der Erfindung weist die Sensoranordnung einen wenigstens teilweise bezüglich des Wellenlängenbereichs des Zeilensensors transparenten Körper auf, insbesondere Glaskörper oder Kunststoffkörper, wobei der Körper das Codeelement aufweist, insbesondere wobei das Codemuster auf oder in dem Körper vorliegt, und/oder der Körper als das Codeelement ausgebildet ist.

Im Falle, dass der Körper das Codeelement aufweist ist der Abstand d von mindestens 1 mm und maximal 10 mm insbesondere durch die räumliche Ausdehnung des Körpers vorgegeben, wobei das Codeelement (mit Codemuster) an einer ersten Endseite des Körpers vorliegt und der Zeilensensor an einer zweiten, der ersten Endseite insbesondere gegenüberliegenden Endseite des Körpers angeordnet ist, insbesondere wobei die zweite Endseite und eine Erfassungsfläche des Zeilensensors eine gemeinsame Kontaktfläche bilden. Der Körper kann beispielsweise quaderförmige ausgeführt sein, wobei des Codemuster und der Zeilensensor an jeweils gegenüberliegenden (parallelen) Flächen (= erste und zweite Endseite) des Körpers angeordnet sind.

Erfindungsgemäss weist bei einer weiteren Ausführung der Erfindung das Codeelement Bereiche unterschiedlicher Transmissivität zumindest bezüglich einer optischen Strahlung mit einer Wellenlänge (λ_{B}) aus dem wenigstens einen Wellenlängenbereich auf, wobei das Codemuster durch die Bereiche unterschiedlicher Transmissivität repräsentiert ist, insbesondere wobei die Bereiche unterschiedlicher Transmissivität ein Linienmuster mit unterschiedlichen Linienabständen und/oder Linienbreiten definieren.

Gemässe einer spezielleren Ausführungsform der Erfindung sind die Bereiche unterschiedlicher Transmissivität derart ausgestaltet, dass das Codemuster mindestens einen sich linear erstreckenden strahlungsdurchlässigen Transmissionsbereich, insbesondere einen als Spalt wirkenden strahlungsdurchlässigen Bereich, mit einer Spaltbreite b definiert. Als Resultat einer Projektion des Codemusters ergibt sich dadurch mindestens ein entsprechender Lichtstreifen.

Insbesondere liegt der mindestens eine Transmissionsbereich erfindungsgemäss mit derartiger Spaltbreite b vor und das Codeelement ist mit derartigem Abstand d relativ zu dem Zeilensensor angeordnet, dass die Beugungsbedingung d ≥ b² / λ_{B}, insbesondere die Fraunhofer-Beugungsbedingung d >> b² / λ_{B} erfüllt ist, insbesondere für die Projektion des Codemusters bei einer Beleuchtung des Codeelements mit der optischen Strahlung der Wellenlänge λ_{B}.

Ferner kann der mindestens eine Transmissionsbereich erfindungsgemäss derart ausgestaltet sein und das Codeelement mit derartigem Abstand d relativ zu dem Zeilensensor angeordnet sein, dass für eine Beugung der optischen Strahlung an der Sensoranordnung im Wesentlichen Fernfeldbeugungsbedingungen vorliegen.

Die Bereiche unterschiedlicher Transmissivität sind gemäss einer weiteren bevorzugten, erfindungsgemässen Ausführungsform derart ausgestaltet, dass das Codemuster entlang einer Erstreckungsachse des Codeelements mehrere der strahlungsdurchlässigen Transmissionsbereiche mit jeweiligen (gegebenenfalls unterschiedlichen) Spaltbreiten b aufweist, wobei die strahlungsdurchlässigen Transmissionsbereiche im Wesentlichen parallel zueinander angeordnet sind und jeweils ein Spaltabstand s zwischen jeweils zwei benachbarten Transmissionsbereichen definiert ist. Der Spaltabstand s kann zwischen jeweils zwei benachbarten Transmissionsbereichen unterschiedlich gross sein. Das Codemuster definiert damit eine Abfolge von lichtdurchlässigen Bereichen, die als Spalte wirken und bezüglich Spaltbreiten b und Spaltabständen s unterschiedlich sein können.

Erfindungsgemäss kann zudem der Spaltabstand s jeweils derart vorliegen und das Codeelement mit derartigem Abstand d relativ zu dem Zeilensensor angeordnet sein, dass die Bedingung d ≠ 2·n·s² / λ_{B} erfüllt ist, wobei n eine beliebige Zahl aus der Menge der natürlichen Zahlen ist, insbesondere für die Projektion des Codemusters bei einer Beleuchtung des Codeelements mit der optischen Strahlung der Wellenlänge λ_{B}.

Gemäss einer weiteren Ausführungsform der Erfindung beträgt die Spaltbreite b bezüglich der Erstreckungsachse des Codeelements mindestens 0,05 mm, sowie insbesondere maximal 0,2 mm, , und der Spaltabstand s zwischen zumindest zwei benachbarten Transmissionsbereichen (ebenfalls bezüglich der Erstreckungsachse des Codeelements) beträgt mindestens 0,5 mm, sowie insbesondere maximal 5 mm. Hierfür sind die Bereiche unterschiedlicher Transmissivität entsprechend ausgestaltet.

Bezüglich der Ausgestaltung des Codeelements bzw. des Codemusters wird der Code damit erfindungsgemäss insbesondere aus dünnen strahlungsdurchlässigen Spalten mit (relativ dazu) grossen Zwischenabständen gebildet. Dieses Verhältnis von Spaltbreiten b und Spaltabständen s des Codes wird aufgrund der bevorzugten Fraunhofer-Beugung und der die Ausgestaltung limitierenden Talbotlänge (für n-te Ordnungen) gewählt.

Aus diesen Bedingungen ergibt sich im Speziellen ein Code mit z.B. 0,05 mm breiten transmittanten Spalten und einer wechselnden Periode (= Abstand zwischen den Spalten) von 0,6 zu 0,9 mm. Auf einem 8 mm langen Zeilenarray (Zeilensensor) können so ca. 12 Perioden abgebildet werden. Der Abstand d zwischen Code und Sensor kann dabei 1 mm bis 10 mm betragen, wobei bei Lichtmangel ein kürzerer Abstand zu bevorzugen ist, jedoch grössere Abstände die Auflösung erhöhen. Mit Abstand d = 2 mm wird eine Winkelgenauigkeit für die Neigung von 30 cc über einen Messbereich von 40 gon erreicht; bei d = 5 mm wird eine Genauigkeit von mindestens 10 cc erreicht.

Bei einer Spaltbreite b von 0,05 mm, einem Abstand von Code zu Sensor von 5 mm (bei senkrechtem Lichteinfall), einer Sensorlänge von 8 mm und einem Messbereich für die Sensoranordnung von +/- 45° Neigung wird die Standardabweichung für die Winkelbestimmung für die Spaltabstände 0,6 mm, 0,85 mm und 1,1 mm auf 8 mm Sensorlänge verteilt am geringsten.

Im Speziellen sind die Bereiche unterschiedlicher Transmissivität erfindungsgemäss derart ausgestaltet, dass aus einer erfassten Lage der Bereiche auf und mit dem Zeilensensor eine eindeutige Lagebestimmung des auf den Zeilensensor abgebildeten Codemusters auf dem Zeilensensor ausführbar ist. Hierfür ist beispielsweise eine nicht periodische Strukturierung des Codemusters vorteilhaft (d.h. insbesondere unterschiedliche Spaltabstände b).

Bezüglich eines Messbereichs für die Sensoranordnung ist die Sensoranordnung erfindungsgemäss bevorzugt derart ausgebildet, dass eine Neigung der Sensoranordnung bezüglich der wenigstens einen Achse aus der mittels des Zeilensensors bestimmbaren Lage der Projektion des Codemusters auf dem Zeilensensor innerhalb eines Neigungswinkelbereichs von bis zu ±45° bezüglich der Achse ableitbar ist.

Ein anderer Aspekt betrifft ferner eine Reflektoranordnung zur Positionsbestimmung und/oder Markierung von Zielpunkten, insbesondere für die industrielle bzw. geodätische Vermessung, mit einem Retroreflektor zur Positionsbestimmung für die Reflektoranordnung mittels paralleler, insbesondere koaxialer, Strahlreflexion und mit einer Sensoranordnung. Dabei weist die Sensoranordnung eine Linse und einen wenigstens bezüglich eines Wellenlängenbereichs sensitiven Sensor mit einer Empfangsrichtung orthogonal zu dessen Detektionsfläche auf, wobei die Linse und der Sensor derart starr verbunden sind, dass mittels des Sensors eine bezüglich der Empfangsrichtung einfallswinkelabhängige Lage eines durch die Linse definierten Beleuchtungsquerschnitts auf der Detektionsfläche bestimmbar ist.

Die Sensoranordnung ist somit derart ausgebildet, dass durch einfallswinkelabhängige Strahldetektion eine Neigung bezüglich wenigstens einer Achse für die Reflektoranordnung bestimmbar ist.

Gemäss einer bestimmten erfindungsgemässen Ausführungsform dieses alternativen Aspekts ist der Sensor dabei derart ausgebildet, dass mittels des Sensors eine Form des Beleuchtungsquerschnitts bestimmbar ist - und zwar derart bestimmbar ist, dass bei Beleuchten der Sensoranordnung mit Beleuchtungsstrahlung mit einer bezüglich der Strahlrichtung nicht rotationssymmetrischen, insbesondere asymmetrischen, Beleuchtungsdivergenz aus der bestimmbaren Lage des Beleuchtungsquerschnitts auf der Detektionsfläche eine Neigung bezüglich der wenigstens einen Achse ableitbar ist und aus der Form des dabei auf der Detektionsfläche entstehenden Beleuchtungsquerschnitts, insbesondere des Beleuchtungsflecks bzw. des beleuchteten Bereichs, eine Neigung bezüglich einer weiteren Achse ableitbar ist.

Im Rahmen dieses anderen Aspekts sind die Linse und der Sensor derart angeordnet, dass die optische Achse der Linse parallel zur Empfangsrichtung des Sensors ausgerichtet ist, insbesondere wobei die optische Achse den geometrischen Schwerpunkt der Detektionsfläche schneidet.

Alternativ oder zusätzlich ist die Linse als Zylinderlinse ausgebildet.

Der Sensor ist gemäss einer speziellen Ausführungsform (betrifft also sowohl eine Sensoranordnung mit einer Linse als auch erfindungsgemäss eine solche Anordnung mit einem Codeelement) als Zeilensensor oder Flächensensor ausgebildet, insbesondere als CCD oder CMOS.

Bezüglich der strukturellen Ausgestaltung der Reflektoranordnung weist diese gemäss einer weiteren Ausführungsform der Erfindung eine Trägerstruktur auf, vermittels derer die Zielpunkte positionsbestimmbar und/oder markierbar sind, wobei der Retroreflektor und die Sensoranordnung von der Trägerstruktur getragen werden und in bekannter Positionsrelation zueinander angeordnet sind. Insbesondere ist die Trägerstruktur dabei als Messhilfsinstrument, insbesondere als Vermessungsstab oder Tastwerkzeug, ausgebildet oder ausgebildet als mobiler handhaltbarer Feld-Controller mit einer optischen Anziel- bzw. Markiereinheit für die (koordinative) Positionsbestimmung und/oder Markierung der Zielpunkte oder weist eine Aufsetzvorrichtung zur Befestigung an dem Messhilfsinstrument oder dem Feld-Controller auf.

Die Möglichkeit der Neigungsbestimmung ist erfindungsgemäss nicht bezüglich einer Achse beschränkt, sondern kann bezüglich mehrerer Achsen erfolgen. Die Reflektoranordnung weist hierfür gemäss einer weiteren erfindungsgemässen Ausführungsform zumindest eine weitere Sensoranordnung auf, insbesondere getragen durch die Trägerstruktur, wobei die zumindest eine weitere Sensoranordnung in einer definierten Ausrichtung und einer definierten Position relativ zur ersten Sensoranordnung zur Bestimmung einer Neigung bezüglich einer weiteren Achse angeordnet ist. Entsprechend der Anordnung einer weiteren Sensoranordnung kann die Reflektoranordnung über mehrere zusätzliche solcher Sensoranordnung verfügen, um eine Neigungsbestimmung für mehrere Achsen und/oder eine genauere Bestimmung bezüglich einer Achse (z.B. durch Mittelung mehrere Neigungswerte) bereitzustellen.

In Hinblick auf die Bestimmung der Neigung für mehrere Achsen bzw. auf die Orientierungsbestimmung für die Reflektoranordnung weist diese in einer bestimmten Ausführung erfindungsgemäss mehrere Hilfspunkt-Markierungen, insbesondere verkörpert durch Leuchtdioden oder Reflektoren, in fixer und bekannter räumlicher Verteilung relativ zueinander auf, wobei die Hilfspunkt-Markierungen eine Neigungsbestimmung bezüglich mindestens einer weiteren Achse für die Reflektoranordnung durch Bildverarbeiten eines Bildes, in dem die Hilfspunkt-Markierungen zumindest teilweise erfasst sind, bereitstellen, insbesondere wobei die Hilfspunkt-Markierungen eine räumliche Orientierungsbestimmung bereitstellen.

Ferner verfügt die Reflektoranordnung gemäss einer weiteren speziellen Ausführungsform über eine Inertialmesseinheit zur fortlaufenden Bestimmung einer Orientierung und/oder Neigung der Reflektoranordnung, insbesondere zur Bestimmung einer Änderung der Position, Orientierung und/oder Neigung, insbesondere wobei die Inertialmesseinheit einen Beschleunigungssensor, einen Drehratensensor, einen Neigungssensor und/oder einen Magnetkompass aufweist. Hierbei können mit hoher Messrate Neigungsdaten von der IMU mit der langsameren Messrate des Codeelements als Stützstellen abgeglichen werden, um mögliche zeitliche Drifts der IMU zu kompensieren.

Zur Übermittlung von Daten (z.B. von Messwerten, die für die Neigungsbestimmung weiterverarbeitete werden müssen, oder von bereits abgeleiteten Neigungswerten) weist die Reflektoranordnung gemäss einer spezifischen erfindungsgemässen Ausführungsform eine Sendeeinheit zur Datenübermittlung auf, insbesondere wobei die Sendeeinheit derart ausgebildet ist, dass die Datenübermittlung mittels Aussendung von elektromagnetischer Strahlung, insbesondere von moduliertem Licht, durchführbar ist. Dieses kann z.B. auch über den Messstrahl zur Distanzmessung (EDM) erfolgen. Die Synchronisation zwischen Empfangs- und Sendeeinheit kann auch über ein von beiden Einheiten zu empfangenen GPS Signal erfolgen. Bevorzugt erfolgt die Berechnung der relevanten Messdaten in der Sensoranordnung, um den Datentransfer klein zu halten.

Die Erfindung betrifft zudem ein Kalibrierverfahren für eine wenigstens zur Positionsbestimmung und/oder Markierung von Zielpunkten ausgebildete Reflektoranordnung mit einer eine Referenz-Sensoranordnung verkörpernden Sensoranordnung und einer ersten Sensoreinheit, wobei die Referenz-Sensoranordnung und die erste Sensoreinheit in bekannter Positionsrelation zueinander angeordnet sind. Im Rahmen des Kalibrierverfahrens erfolgen ein Erzeugen von Referenzneigungsdaten bezüglich einer ersten Achse mittels der Referenz-Sensoranordnung und ein Kalibrieren der ersten Sensoreinheit bezüglich der ersten Achse basierend auf den Referenzneigungsdaten.

Erfindungsgemäss erfolgen das Erzeugen der Referenzneigungsdaten durch ein Empfangen von, insbesondere kollimierter, Beleuchtungsstrahlung unter einem Einfallswinkel a, ein Bestimmen eines von diesem Einfallswinkel abhängigen Beleuchtungsstrahlungsauftreffbereichs auf einem Sensor der Referenz-Sensoranordnung und ein Ableiten der Referenzneigungsdaten aus der Lage des Beleuchtungsstrahlungsauftreffbereichs und einer vorbekannten Einfallsrichtung der Beleuchtungsstrahlung.

Gemäss der Erfindung ist die Referenz-Sensoranordnung verkörpert durch eine Sensoranordnung einer erfindungsgemässen Reflektoranordnung, d.h. die Referenz-Sensoranordnung weist ein Codeelement mit Codemuster und einen wenigstens bezüglich eines Wellenlängenbereichs sensitiven Sensor mit einer Empfangsrichtung orthogonal zu dessen Detektionsfläche auf, wobei das Codeelement und der Sensor mit einem definierten Abstand derart starr verbunden sind, dass mittels des Sensors eine bezüglich der Empfangsrichtung winkelabhängige Lage einer Projektion des Codemusters als Beleuchtungsstrahlungsauftreffbereich auf der Detektionsfläche des Sensors bestimmt wird.

Das Kalibrieren der ersten Sensoreinheit erfolgt insbesondere in definierten zeitlichen Intervallen, insbesondere fortlaufend.

Die erste Sensoreinheit ist gemäss einer speziellen Ausführungsform der Erfindung verkörpert durch eine Inertialmesseinheit (IMU) zur fortlaufenden Bestimmung einer Neigung, Orientierung und/oder Position der Reflektoranordnung, insbesondere zur Bestimmung einer Änderung der Neigung, Orientierung und/oder Position, insbesondere wobei die Inertialmesseinheit (IMU) einen Beschleunigungssensor, einen Drehratensensor, einen Neigungssensor und/oder einen Magnetkompass aufweist. Alternativ ist die erste Sensoreinheit ausgebildet als ein, insbesondere mehrachsiger, Neigungssensor zur Bestimmung einer Neigung der Reflektoranordnung bezüglich mehrerer Achsen, insbesondere als Gasneigungssensor.

Gemäss einer spezifischen Ausführungsform der Erfindung werden mit der ersten Sensoreinheit erste Sensordaten erzeugt, welche die Neigung bezüglich der ersten Achse repräsentieren, und es wird ein Übereinstimmungsgrad zwischen den ersten Sensordaten und den Referenzneigungsdaten bestimmt. Zudem erfolgt das Kalibrieren der ersten Sensoreinheit in Abhängigkeit von dem Übereinstimmungsgrad, insbesondere automatisch.

Gemäss einer weiteren erfindungsgemässen Ausführungsform ist eine Neigungsbestimmung mit der erste Sensoreinheit mit einem sich verändernden, insbesondere im zeitlichen Verlauf zunehmenden, Messfehler behaftet und der Messfehler wird durch das Kalibrieren der ersten Sensoreinheit kompensiert, insbesondere wobei die erste Sensoreinheit als Inertialmesseinheit (IMU) oder als insbesondere mehrachsiger Neigungssensor ausgebildet ist.

Im Rahmen der Erfindung erfolgt das Erzeugen der Referenzneigungsdaten insbesondere derart, dass die Referenzneigungsdaten eine Neigung bezüglich (auch) einer zweiten und/oder einer dritten Achse repräsentieren, die erste Sensoreinheit zur Neigungsbestimmung bezüglich wenigstens der zweiten und/oder dritten Achse ausgebildet ist und das Kalibrieren der ersten Sensoreinheit für die Neigungsbestimmung (auch) bezüglich der zweiten und/oder dritten Achse basierend auf den Referenzneigungsdaten erfolgt.

Des Weiteren erfolgt das Erzeugen der Referenzneigungsdaten gemäss einer spezifischen Ausführungsform der Erfindung derart, dass die Referenzneigungsdaten eine räumliche Orientierung der Reflektoranordnung repräsentieren, eine Position der Reflektoranordnung bestimmt wird, die erste Sensoreinheit zur Orientierungs- und Positionsbestimmung, insbesondere zur Lagebestimmung, der Reflektoranordnung ausgebildet ist und das Kalibrieren der ersten Sensoreinheit bezüglich deren Funktionalität zur Orientierungs- und Positionsbestimmung, insbesondere Lagebestimmung, basierend auf den Referenzneigungsdaten und der bestimmten Position erfolgt.

Dadurch kann eine Kalibrierung der Sensoreinheit in bis zu sechs Freiheitsgraden (6 DOF, degrees of freedom) gewährleistet werden, sodass beispielsweise eine IMU bezüglich dieser Parameter re-kalibriert werden kann.

Gemäss einer weiteren erfindungsgemässen Ausführungsform weist die Reflektoranordnung zumindest eine weitere Referenz-Neigungssensoreinheit und/oder einen Retroreflektor auf. Die zumindest eine weitere Referenz-Neigungssensoreinheit und/oder der Retroreflektor sind dabei mit einer definierten Ausrichtung und einer definierten Position der Reflektoranordnung zur Bestimmung einer Neigung bezüglich einer weiteren Achse bzw. einer Position der Reflektoranordnung zugeordnet.

Die Erfindung betrifft zudem eine Verwendung der erfindungsgemässen Reflektoranordnung (gemäss obigen Ausführungen) zur Positions- und Neigungsbestimmung, durch ein Bestrahlen des Retroreflektors mit Messstrahlung und ein Positionsbestimmen für die Reflektoranordnung mittels der durch den Retroreflektor reflektierten Messstrahlung und durch ein, insbesondere kollimiertes, Beleuchten der Sensoranordnung, wobei durch eine Ausrichtung der Beleuchtungsachse relativ zur Erfassungsrichtung des Sensors der Sensoranordnung ein Einfallswinkel definiert ist.

Ferner betrifft die derartige Verwendung der Reflektoranordnung ein positionssensitives Erfassen eines bei dem Beleuchten erzeugten Strahlauftreffmusters, insbesondere des Beleuchtungsquerschnitts oder der Projektion des Codemusters, auf dem Sensor und ein Ableiten einer Neigung der Reflektoranordnung bezüglich mindestens der Beleuchtungsachse aus der mittels des positionssensitiven Erfassens bestimmbaren Lage des Strahlauftreffmusters auf der Detektionsfläche, wobei die Lage des Strahlauftreffmusters vom Einfallswinkel abhängt.

Zur Unterdrückung von Umgebungslicht kann die Messstrahlung hinsichtlich einer spezifischen erfindungsgemässen Ausführungsform moduliert werden. Dadurch lassen sich Dunkel- (ohne Messstrahlung) und Hellbilder (mit Messstrahlung) aufsummieren und subtrahieren, wodurch ein verbessertes Signal-zu-Rausch-Verhältnis erreicht werden kann.

Ausserdem betrifft die Erfindung ein Computerprogrammprodukt, das auf einem maschinenlesbaren Träger gespeichert ist, zur Steuerung bzw. Ausführung eines obigen Kalibrierverfahrens, insbesondere wenn das Computerprogrammprodukt auf einer Steuerungs- und Verarbeitungseinheit eines Vermessungsgeräts, insbesondere Totalstation, Theodolit oder Lasertracker, ausgeführt wird.

Die erfindungsgemässe Vorrichtung und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1a-b: jeweils eine Ausführungsform einer erfindungsgemässen Reflektoranordnung ;
- Fig.1c: eine erfindungsgemässe Ausführungsform einer an einer Reflektoranordnung gemäss Fig. 1a vorgesehenen Mehrzahl von Sensoranordnungen im Querschnitt;
- Fig.2: eine weitere Ausführungsform einer erfindungsgemässen Reflektoranordnung mit einem zentral angeordneten Retroreflektor und mit vier Sensoranordnungen zur Bestimmung einer Neigung für die Reflektoranordnung bezüglich zumindest zweier Achsen;
- Fig.3a-b: jeweils eine Ausführungsform einer Sensoranordnung mit einer Linse und einem Sensor;
- Fig.4a-b: jeweils eine Seitenansicht einer weiteren Ausführungsform einer erfindungsgemässen Sensoranordnung mit einem Codeelement und einem Sensor;
- Fig.5a-b: eine weitere Ausführungsform einer Sensoranordnung einer erfindungsgemässen Reflektoranordnung mit einem Codeelement mit Codemuster und einem Zeilensensor; und
- Fig.6: eine weitere erfindungsgemässe Ausführungsform einer Reflektoranordnung mit einem als teildurchlässiges Prisma ausgebildeten Retroreflektor.

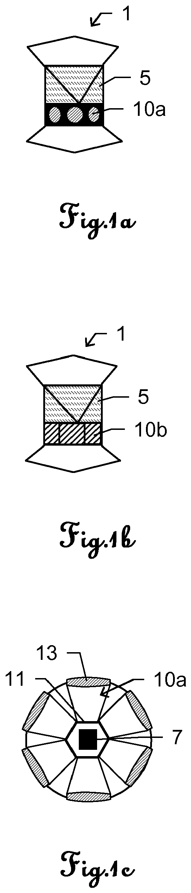

Die Fig. 1a-b zeigen jeweils eine Ausführungsform einer erfindungsgemässen Reflektoranordnung 1.

Die Reflektoranordnung 1 weist jeweils einen Retroreflektor 5 auf. Dieser kann - wie hier gezeigt - beispielsweise als "Rundum-Prisma" ausgeführt sein und so aus unterschiedlichen Richtungen angezielt werden, wobei eine Reflexion der dabei auf das Prisma 5 gerichteten Messstrahlung parallel oder koaxial erfolgt. Alternativ - hier jedoch nicht gezeigt - könnte der Retroreflektor durch eine retro-reflektierende Folie verkörpert sein. Ein Anzielen des Reflektors wird typischerweise mit einem geodätischen oder industriellen Vermessungsgerät, z.B. einer Totalstation, einem Tachymeter oder einem Lasertracker, zur Entfernungs- und Positionsbestimmung des Reflektors 5 relativ zu dem Vermessungsgerät durchgeführt. Dabei können zudem absolute Koordinaten bezüglich einer aktuellen Position des Reflektors 5 bzw. der gesamten Reflektoranordnung 1 bestimmt werden.

Zudem weist die Reflektoranordnung 1 erfindungsgemäss mehrere Sensoranordnungen 10a-b auf, mittels derer neben der Positionsbestimmung für die Reflektoranordnung 1 eine Neigungsbestimmung bezüglich wenigstens einer Achse bereitgestellt ist. Die Neigungsbestimmung erfolgt durch ein Beleuchten der jeweiligen Sensoranordnung 10a-b und einem Bestimmen des Einfallwinkels der Beleuchtungsstrahlung durch Detektieren einer Lage eines Strahlauftreffmusters mit einem der jeweiligen Sensoranordnung 10a-b zugeordneten Sensor. Ein solcher Sensor ist zur Bestimmung einer Auftreffposition für auf die Detektionsfläche des Sensors auftreffende Strahlung ausgebildet, beispielsweise als CCD oder CMOS. Je nach Ausgestaltung der jeweiligen Sensoranordnung 10a-b (und der Beleuchtungsstrahlung) kann der Einfallswinkel und damit die Neigung in einer, zwei oder drei Achsen bestimmt werden.

Bei der zur Beleuchtung und Neigungsbestimmung verwendeten Beleuchtungsstrahlung handelt es sich insbesondere um kollimierte Strahlung, insbesondere Laserstrahlung einer definierten Wellenlänge. Beispielsweise kann die durch ein geodätisches Vermessungsgerät emittierbare Messstrahlung (zur Entfernungsbestimmung) auch zur Beleuchtung verwendet werden und/oder eine zusätzliche Strahlquelle (und ggf. Optik) für eine geeignete Beleuchtung vorgesehen sein.

Mit der Kenntnis einer Ausbreitungsrichtung der Beleuchtungsstrahlung und dem bestimmbaren Einfallswinkel kann dann eine Orientierung der Sensoranordnung 10a-b und damit der gesamten Reflektoranordnung 1 bezüglich zumindest einer Achse abgeleitet werden.

Die Figuren 1a-b zeigen jeweils eine Mehrzahl von Sensoranordnungen 10a-b, die jeweils z.B. mit einem Winkelversatz von 60° um eine Reflektorachse positioniert sind. Durch einen entsprechenden Messbereich von ca. 60° der jeweiligen Sensoranordnungen 10a-b kann somit aus einer beliebigen horizontalen Richtung (innerhalb eines durch die Sensoranordnungen 10a-b gegebenen vertikalen Messbereichs, z.B. ebenfalls 60° zulässiger Einfallswinkel relativ zu einer Erfassungsrichtung der jeweiligen Sensoren) die Neigungsbestimmung erfolgen. Mit anderen Worten wird durch diese Anordnung der Sensoranordnungen 10a-b ein horizontaler Messbereich von im Wesentlichen 360° abgedeckt. Gemäss anderen Ausführungsformen kann der Winkelversatz zwischen den Sensoranordnungen 10a-b alternativ beispielsweise 30° oder 40° betragen oder zumindest kleiner oder gleich 90° sein, so dass dabei eine zuverlässige Neigungsbestimmung aus im Wesentlichen beliebigen horizontalen Richtungen möglich bleibt, wobei aufgrund der gewählten strukturellen Anordnung ggf. zwischen zwei Sensoranordnungen 10a-b eine (jedoch vernachlässigbare) Detektionslücke entstehen kann.
Eine detaillierte Beschreibung für erfindungsgemässe Ausführungsformen der Sensoranordnungen 10a-b ist in Zusammenhang mit Figs. 1c, 4a-b und 5a-b angeführt.

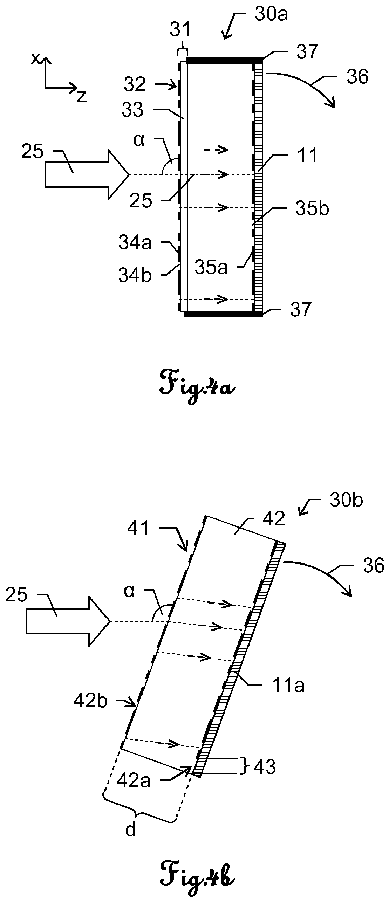

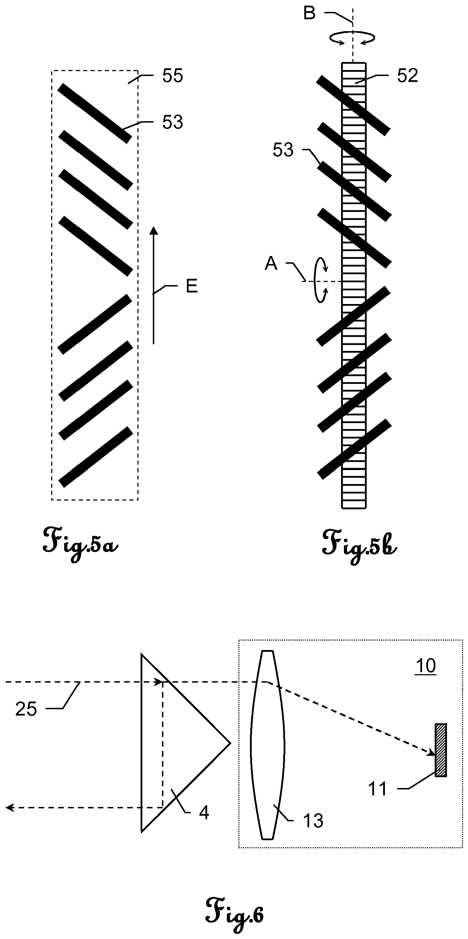

Fig. 1c zeigt eine beispielhafte erfindungsgemässe Ausführungsform einer an einer Reflektoranordnung 1 gemäss Fig. 1a vorgesehenen Mehrzahl von Sensoranordnungen 10a im Querschnitt. Eine einzelne dieser Sensoranordnungen 10a weist dabei eine Linse 13 und einen der jeweiligen Linse 13 zugeordneten Sensor 11 auf, wobei diese in einer bestimmten und starren Positionierung relativ zueinander angeordnet sind. Gemäss der Erfindung kann anstelle der Linse 13 jeweils ein Codeelement mit einem bestimmten Codemuster vorgesehen sein (hier nicht gezeigt; siehe Figs. 4a-b und 5a-b). Bei einem Beleuchten einer solchen Sensoranordnung 10a wird die einfallende Strahlung mittels des Codeelements bzw. der Linse 13 derart beeinflusst und/oder geformt (z.B. fokussiert), dass ein Beleuchtungsmuster bzw. -fleck, insbesondere mit einer durch das Codeelement bzw. die Linse 13 und den Abstand zwischen Codeelement/Linse 13 und Sensor 11 definierten Form und Grösse, auf dem Sensor erzeugt wird. Die Lage dieses so erzeugbaren Strahlauftreffbereichs hängt dabei von dem Einfallswinkel der Beleuchtungsstrahlung relativ zu einer Erfassungsrichtung des Sensors (orthogonal zur photoaktiven Sensorfläche bzw. Erstreckungsrichtung des Sensors), insbesondere relativ zur optischen Achse der Linse 13, ab und kann durch den Sensor 11 bestimmt werden.

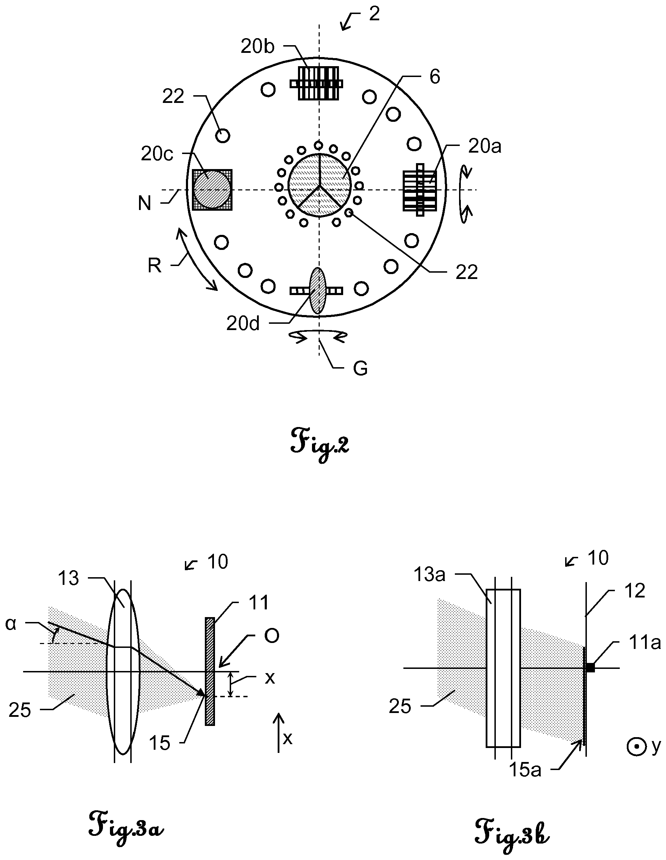

Aus der so bestimmbaren Lage der durch das Codeelement bzw. die Linse 13 geformten (insbesondere durch Brechung bezüglich ihrer Divergenz veränderten) und auf den Sensor 11 auftreffenden Strahlung kann eine Neigung der jeweiligen Sensoranordnung 10a bzw. des gesamten Systems aus mehreren Sensoranordnungen 10a und Reflektor 5 abgeleitet werden. Eine detaillierte Beschreibung der Linse-Sensor-Anordnung und der damit ausführbaren Neigungsbestimmung wird mit den Figs. 3a und 3b angegeben.

Ferner zeigt Fig. 1c eine zusammen mit den Sensoranordnungen 10a an einer Reflektoranordnung 1 vorgesehenen Inertialmesseinheit 7 (IMU). Diese IMU 7 stellt zusätzlich eine Neigungs- und Orientierungsbestimmungsfunktionalität für die Reflektoranordnung 1 bereit, insbesondere wobei eine Änderung in Position und Ausrichtung der und durch die IMU 7 fortlaufend bestimmbar ist. Beispielsweise verfügt die IMU 7 hierzu über einen Magnetkompass zur Ermittlung der Nordausrichtung, einen Neigungssensor zur Bestimmung der Neigung relativ zu einem Erdschwerefeldvektor und einen Beschleunigungssensor zur Erfassung von Relativbewegungen der IMU 7 und damit auch der Reflektoranordnung 1.

Gemäss der Erfindung kann eine Kalibrierung einer solchen IMU 7 basierend auf Referenzdaten, die mittels einer Sensoranordnung der Reflektoranordnung 1 erzeugbar sind, erfolgen. Eine IMU ist typischerweise derart ausgebildet, dass damit eine schnelle relative Positions- und Orientierungsbestimmung erfolgen kann. Jedoch summieren sich Fehler bei Messungen mit einer IMU im zeitlichen Messverlauf dabei auf, wodurch die Genauigkeit der relativen Orientierungsbestimmung abnimmt. Mittels einer Sensoranordnung mit Codeelement und Sensor kann hingegen eine Neigungs- bzw. Orientierungsbestimmung sehr präzise anhand einer externen Referenz (bekannte Ausbreitungsrichtung der Beleuchtungsstrahlung) bestimmt werden. Aus einer solchen Bestimmung sind entsprechende Referenzwerte bezüglich der Neigung bzw. Orientierung der Reflektoranordnung ableitbar, anhand derer eine (Re-) Kalibrierung der IMU vorgenommen werden kann. Hierzu weist die Reflektoranordnung insbesondere eine Verarbeitungseinheit und Kommunikationsmittel zur Verarbeitung und zum Abgleich von Messdaten und zum Informationsaustausch mit dem die Beleuchtungsstrahlung emittierenden Vermessungsgerät auf.

Ein Benutzer einer solchen Reflektoranordnung in Verbindung mit einer IMU (oder einem alternativen Neigungsmesser) kann somit im Verlauf einer Messaufgabe beispielsweise hauptsächlich die durch die IMU (bzw. den Neigungsmesser) generierten Messdaten verwenden und diese IMU (bzw. den Neigungsmesser) in regelmässigen Abständen (zeitlich oder bezüglich der Anzahl durchgeführter Messungen) neu Kalibrieren und so eine gross bleibende Messgenauigkeit über den gesamten Messverlauf herstellen. Hierfür muss die Reflektoranordnung lediglich z.B. durch eine Totalstation mit (kollimierter) Strahlung einer bekannten Ausbreitungsrichtung bestrahlt werden, die Lage des dabei projizierten Codemusters auf und mittels des Sensors bestimmt werden und aus der Lage der Projektion des Musters und der Ausbreitungsrichtung (die mittels der Totalstation vorgebbar und bestimmbar ist) die Orientierung oder Neigung der Reflektoranordnung bestimmt werden. Diese bestimmte Neigung wird mit dem entsprechenden Ausgabewert der IMU verglichen und bei einer gewissen Abweichung (z.B. ausserhalb eines definierten Toleranzbereichs) die IMU entsprechend der bestimmten Orientierung oder Neigung (neu) kalibriert. Diese Schritte laufen nach einem Starten einer hierfür vorgesehenen Kalibrierfunktion insbesondere automatisch ab, wobei jedoch z.B. für den letzten oder einen anderen Schritt eine zusätzliche benutzerseitige Bestätigungseingabe durch das System angefordert werden kann.

Neben der oben beschriebenen Kalibriermöglichkeit durch die Reflektoranordnung kann diese natürlich auch für die Bestimmung der Neigung des Lotstabes bezüglich zumindest einer Achse durch ein Erzeugen einer Projektion des Codemusters auf dem Sensor bei einem entsprechenden Beleuchten (insbesondere zur Absteckung bestimmter Zielpunkte im Gelände oder zur Bestimmung von Positionen von Messpunkten in der industriellen Vermessung (hier ist der Lotstab typischerweise durch ein geeignetes Tastwerkzeug ersetzt)) verwendet werden.

Fig. 2 zeigt eine weitere Ausführungsform einer erfindungsgemässen Reflektoranordnung 2 mit einem zentral angeordneten Retroreflektor 6 zur Positionsbestimmung für die Reflektoranordnung 2, mit vier Sensoranordnungen 20a-d zur Bestimmung einer Neigung für die Reflektoranordnung 2 bezüglich zumindest zweier Achsen (Nick- und Gierachse N,G) und mit einer Anzahl von in bekanntem Positionsbezug angeordneten Markierungen 22 zur Bereitstellung einer Orientierungsbestimmung bezüglich zumindest einer dritten Achse (Rollen R um die Rollachse). Mit dieser Reflektoranordnung 2 ist eine 6DOF-Lagebestimmung derselbigen möglich (Lagebestimmung bezüglich sechs Freiheitsgraden (degrees of freedom), mit drei translatorischen, die von der Anzieleinheit (Theodolit oder Laser-Tracker) bestimmt werden, und drei rotatorischen, bestimmt durch die Sensoranordnung).
Erfindungsgemäss ermöglichen die Sensoranordnungen 20a-d jeweils die Neigungsbestimmung bezüglich zumindest einer Achse. Die beiden Sensoranordnungen 20a und 20b sind dabei jeweils ausgestattet mit einem Codeelement und einem Zeilensensor, wobei bei einer Beleuchtung dieser Sensoranordnungen 20a-b der jeweilige Code des Codeelements auf den zugehörigen Zeilensensor projiziert wird und durch das Bestimmen der Lage der Projektion des Codes auf den Zeilensensor eine Neigung der Reflektoranordnung 2 ableitbar ist. Die entlang der Gierachse G ausgerichtete Sensoranordnung 20a ermöglicht somit eine Neigungsbestimmung bezüglich der Gierachse G (um die Nickachse N) und die Sensoranordnung 20b eine Neigungsbestimmung bezüglich der Nickachse N (um die Gierachse G). Der detaillierte Aufbau und die Wirkungsweise dieser Code-Sensor-Anordnungen 20a-b werden zusammen mit den Figs. 4a-b und 5a-b beschrieben.

Die beiden weiteren Sensoranordnungen 20c und 20d verfügen jeweils über eine Linse und einen Sensor zur Detektion der bei Beleuchtung der Anordnungen 20c-d durch die jeweilige Linse definierten und auf den jeweiligen Sensor auftreffenden Strahlung. Durch die so bestimmbare Lage des Beleuchtungsquerschnitts auf dem jeweiligen Sensor kann eine Neigung der Reflektoranordnung 2 bezüglich wenigstens einer Achse bestimmt werden. Die Sensoranordnung 20c ermöglicht aufgrund eines vorgesehenen Flächensensors eine Neigungsbestimmung bezüglich der Gierachse G (um die Nickachse N) und bezüglich der Nickachse N (um die Gierachse G) und die Sensoranordnung 20d eine Neigungsbestimmung bezüglich der Nickachse N (um die Gierachse G).

Die Sensoranordnung 20c weist einen Flächensensor zur Detektion der auftreffenden Beleuchtungsstrahlung auf, wodurch eine relative Ablage der auftreffenden Beleuchtungsstrahlung von einem Sensornullpunkt (der beispielsweise bei einem senkrechten Auftreffen der Beleuchtungsstrahlung auf der Sensoranordnung beleuchtet wird und z.B. dem Zentrum der Detektionsfläche des Sensors entspricht) in zwei Richtungen (x- und y-Richtung der Detektionsfläche des Sensors) und somit auch die Neigung bezüglich zweier Achsen (N und G) mit dieser Sensoranordnung 20c bestimmt werden kann. Die jeweiligen Ablagen in der x- und y-Richtung der Detektionsfläche repräsentieren damit den jeweiligen Betrag der Neigung. Ferner ist die Sensoranordnung 20c derart ausgebildet, dass mittels des Sensors nicht nur die Lage, sondern auch die Form des auf der Detektionsfläche entstehenden Beleuchtungsquerschnitts bestimmbar ist. Wird nun die Sensoranordnung 20c mit Licht mit einer bezüglich der Strahlrichtung (also bezüglich der Ausbreitungsachse) nicht rotationssymmetrischen Beleuchtungsdivergenz angestrahlt, kann über die bestimmte Form des dadurch entstehenden Lichtspots (und die Lage) der auftreffenden Strahlung zusätzlich eine grobe Neigungsbestimmung bezüglich einer dritten Achse, der Rollachse, erfolgen. Weitere Ausführungen bezüglich dem Aufbau und der Wirkungsweise der Sensoranordnungen 20c-d mit einer Linse sind in Zusammenhang mit den Figs. 3a-b angegeben.

Die erfindungsgemässe Reflektoranordnung 2 wie in Fig. 2 dargestellt kann gemäss alternativen Ausführungen (hier nicht gezeigt) wahlweise mit weniger bzw. nur einer der in Fig. 2 gezeigten Sensoranordnungen mit Codeelement 20a-b ausgerüstet sein oder über zusätzliche derartige Sensoren, beispielsweise zur Genauigkeitssteigerung bei der Neigungsbestimmung, verfügen.

Es versteht sich, dass die an der Reflektoranordnung 2 vorgesehenen Sensoranordnungen 20a-d mehrfach die Bestimmung der Neigung bezüglich der beiden Achsen N und G bereitstellen. Im Rahmen der Erfindung wäre für die Bestimmung der Neigung bezüglich wenigstens einer Achse allein eine der Sensoranordnungen 20a-b ausreichend. Durch die mehrfache Vorsehung solcher Sensorelemente - wie hier gezeigt - kann eine Robustheit der erzeugten Messwerte für die Neigung erzielt werden(z.B. durch Mittelung der Messwerte). Alternativ sind demnach analoge oder ähnliche erfindungsgemässe Ausführungsformen mit nur einer oder mindestens einer der Sensoranordnungen 20a-b denkbar.

Die Markierungen 22 sind beispielsweise als grafische Muster (z.B. mit grossem Kontrast zum Untergrund), Leuchtdioden (LEDs) oder als Reflektoren ausgebildet. Diese Markierungen 22 können mit einer Kamera und in einem mit der Kamera erzeugbaren Bild erfasst werden bzw. sein. Aus einer geometrischen Lage der einzelnen Markierungen 22 im Bild relativ zueinander kann auf eine räumliche Orientierung (in bis zu drei Achsen) der Reflektoranordnung 2 geschlossen werden. Hierfür wird insbesondere ein Bildverarbeitungsschritt, z.B. Kantenextraktion oder Helligkeits- und/oder Kontrastanalyse, unter Verwendung der durch das Bild bereitgestellten Bildinformation ausgeführt, wodurch beispielsweise einzelne Bildschwerpunkte für die jeweiligen Markierungen und somit deren Positionen im Bild bestimmt werden.

Die Reflektoranordnung 1,2 gemäss der Figs. 1a-c oder 2 kann ausserdem eine Befestigungsvorrichtung aufweisen, mittels derer die Anordnung 1,2 beispielsweise an einem Lotstock oder an einer Baumaschine angebracht werden kann. Ein Benutzer eines solchen Lotstabes mit der erfindungsgemässen Reflektoranordnung 1,2 kann dadurch beispielsweise in Verbindung mit einem geodätischen Vermessungsgerät wie einer Totalstation eine exakte Positionsbestimmung eines abzusteckenden Messpunkts durchführen, indem durch ein Beleuchten der Reflektoranordnung 1,2 seitens des Vermessungsgeräts stets eine räumliche Orientierung des Lotstocks genau bestimmt werden kann. Diese Bestimmung wird durch die Sensoranordnung (Abbildung des Codemusters auf den Sensor) und eine entsprechende Auswerteeinheit der Totalstation (oder der Reflektoranordnung) bereitgestellt. Eine Positionsbestimmung kann dabei mittels allgemein bekannter Verfahren zur Entfernungsmessung zu dem vorgesehenen Retroreflektor erfolgen. So ist es dem Benutzer z.B. auch möglich Messpunkte exakt zu bestimmen, wenn der Lotstab sich nicht in vertikaler oder einer alternativen, jedoch bekannten, Ausrichtung befindet.

Fig. 3a zeigt eine Ausführungsform einer Sensoranordnung 10 einer Reflektoranordnung mit einer Linse 13 und einem Sensor 11. Die Beleuchtungsstrahlung 25 trifft unter einem Einfallswinkel α auf die Linse 13 und wird durch diese derart geformt (gebrochen), dass dadurch ein definierter Beleuchtungsquerschnitt auf dem Sensor 11 erzeugt und beleuchtet wird. Die Lage 15 dieses Beleuchtungsquerschnitts auf der Detektionsfläche ist durch den Sensor 11 bestimmbar. Diese Bestimmung kann beispielsweise mittels einer Schwerpunktbestimmung bezüglich der Einstrahlung (Intensitätsverteilung auf der Detektionsfläche) erfolgen.

Anhand des in Fig. 3a dargestellten Querschnitts durch die Sensoranordnung 10 ist ein durch den bestimmten Einfallswinkel α entstehender Versatz x der auf dem Sensor 11 auftreffenden Strahlung in x-Richtung gezeigt. Je grösser der Einfallswinkel α betragsmässig ist, desto grösser ist auch die Ablage in x-Richtung des auftreffenden Beleuchtungsquerschnitts bezüglich einer Referenzposition O auf der Sensorfläche, wobei diese Referenzposition O hier dem Schnittpunkt der optischen Achse der Linse 13 mit dem Zentrum des Sensors 11 auf der Detektionsfläche des Sensors 11 entspricht. Die so bestimmbare Ablage x hängt somit von dem jeweiligen Einfallswinkel α ab, wodurch allein durch das Bestimmen der Ablage x auf den entsprechenden Einfallswinkel α geschlossen werden kann und dadurch eine Neigung der Sensoranordnung 10 (und damit auch der Reflektoranordnung, welcher die Sensoranordnung 10 zugeordnet ist) bezüglich der Ausbreitungsachse der Beleuchtungsstrahlung 25 bestimmt werden kann. Durch einen als Flächensensor 11 ausgebildeten Sensor 11 kann zudem eine Ablage auf dem Sensor 11 in eine zweite Richtung (y-Richtung) und damit auch die Neigung in eine zweite Richtung bezüglich der Ausbreitungsachse bestimmt werden.

Fig. 3b zeigt eine weitere Ausführungsform einer Sensoranordnung 10. Die Sensoranordnung 10 weist eine Zylinderlinse 13a und einen Zeilensensor 11a auf. Durch die Zylinderlinse 13a wird die einfallende Strahlung 25 auf eine Ebene 12 hinter der Linse 13a fokussiert, wobei die fokussierte Strahlung 25 durch die Zylinderlinse 13a in dieser Ebene 12 die Form einer Linie 15a aufweist. Der Zeilensensor 11a ist in der Ebene 12 derart angeordnet, dass die Erstreckungsrichtung von dessen Detektionsfläche im Wesentlichen orthogonal zu der entstehenden Lichtlinie 15a ausgerichtet ist (bezüglich der Fig. 3b bedeutet dies, dass der Sensor 11a entlang einer Achse ausgerichtet ist, die orthogonal zur Zeichnungsebene liegt; y-Richtung).

Dadurch ergibt sich mittels der Fokussierung des Beleuchtungslichts 25 ein beleuchteter Bereich auf dem Sensor 11a dessen relative Lage auf dem Sensor 11a wiederum bestimmbar ist. Der relative Versatz dieses beleuchteten Bereichs relativ zur Mitte der Detektionsfläche des Sensors 11a (diese Mitte wird durch die optische Achse bzw. optische Ebene der Linse 13a geschnitten) ist proportional zum jeweiligen Einfallswinkel bezüglich der y-Richtung, also proportional zur Neigung der Sensoranordnung 10 bezüglich der y-Richtung relativ zur Ausbreitungsachse der Beleuchtungsstrahlung. In Zusammenhang mit derartigen Ausführungen, d.h. wobei die durch die Linse geformte Beleuchtungsstrahlung nicht vollständig oder nahezu vollständig auf den Sensor fällt, ist dieser beleuchtete Bereich auf dem Sensor 11a als Beleuchtungsquerschnitt (Strahlauftreffbereich) auf dem Sensor 11a zu verstehen.

Fig. 4a zeigt eine Seitenansicht einer weiteren Ausführungsform einer erfindungsgemässen Sensoranordnung 30a einer erfindungsgemässen Reflektoranordnung mit einem Sensor 11 zur Erfassung von auf den Sensor 11 auftreffender elektromagnetischer Strahlung 25, insbesondere von Strahlung eines definierten Wellenlängenbereichs. Die Sensoranordnung 30a weist ausserdem ein Codeelement 31 mit einem Substrat 33 und einem auf das Substrat 33 aufgebrachten Codemuster 32 auf.

Das Substrat 33 ist hierbei derart ausgeführt, dass die zur Beleuchtung der Sensoranordnung 30a verwendete Beleuchtungsstrahlung 25, welche beispielsweise durch die Messstrahlung (z.B. Laserstrahlung) eines Vermessungsgeräts (z.B. Totalstation, Theodolit oder Lasertracker) verkörpert ist, durch das Substrat 33 strahlen kann, d.h. das Substrat 33 ist wenigstens bezüglich der Wellenlänge der Beleuchtungsstrahlung 25 bzw. bezüglich eines Beleuchtungswellenlängenbereichs durchlässig ausgeführt. Das Substrat 33 kann beispielsweise auf einem entsprechend transmittanten Kunststoff oder aus einem diesen Anforderungen entsprechenden Glas gefertigt sein.

Die Beleuchtungsstrahlung ist typischerweise durch eine im Wesentlichen kollimierte und kohärente Strahlung repräsentiert.

Das Codeelement 31 weist unterschiedliche Bereiche 34a,34b auf, wobei die jeweiligen dunklen Bereiche 34a für die Beleuchtungsstrahlung 25 undurchlässig und die Bereiche 34b für die Beleuchtungsstrahlung durchlässig ausgebildet sind. Durch eine bestimmte Anordnung bzw. - wie hier ausgeführt - eine zeilenweise Abfolge von Bereichen 34a und Bereichen 34b (bezüglich der x-Richtung) ist mittels des Codeelements 31 ein Codemuster bereitgestellt, welches bei Beleuchtung auf den Sensor 11 (in Form von Linien) projizierbar ist.

Auf dem Sensor 11 wird bei Beleuchtung also eine Projektion entsprechend dem Codemuster 32 erzeugt. Mit anderen Worten entsteht dabei auf dem Sensor 11 ein Schattenwurf gemäss dem durch das Codeelement 31 bereitgestellten Codemuster 32, wobei die Lage der einzelnen durch die dunklen Bereiche 33a verursachten Schatten 35a auf dem Sensor 11 von einem Einfallswinkel α der Beleuchtungsstrahlung 25 abhängt (vgl. Fig. 4b). Bei einer Beleuchtung der Sensoranordnung 30a mit der Beleuchtungsstrahlung 25 unter einem Einfallswinkel α von 90°, wie hier gezeigt, wird das Codemuster 32 gänzlich (zumindest bezüglich der Erstreckung in x-Richtung) und ohne Versatz auf den Sensor 11 abgebildet.

Durch den Sensor 11 sind die jeweiligen (durch die Projektion des Codemusters 32 erzeugten) beleuchteten und dunklen Bereiche 35a,35b auf dem Sensor 11 detektierbar und deren relative Lage auf dem Sensor 11 bestimmbar. Aus der bestimmten Lage der einzelnen Lichtstreifen 35b und/oder Schatten 35a und/oder der Gesamtheit der hellen 35b und dunklen 35a Bereiche kann wiederum der aktuelle Einfallswinkel α abgeleitet werden und auf eine relative Neigung der Sensoranordnung 30a bezüglich der Einfallsrichtung der Beleuchtungsstrahlung 25 geschlossen werden. Hierzu geht der Sensoranordnung 30a eine Kalibrierung voraus, wobei für zumindest einen Beleuchtungszustand bei einem definierten Einfallswinkel α die Lage der Projektion des Codemusters 32 auf dem Sensor bestimmt wird.

Das als Liniencode ausgeführte Codemuster 32, welches durch die durchlässigen Bereiche 34b Linien (Spalte) unterschiedlicher Breite und mit unterschiedlichen Linienabständen (definierbar durch die Grösse der undurchlässigen Bereiche 34a) von benachbarten Linien aufweist und dessen Linien im Wesentlichen parallel zur Detektionsfläche des Sensors 11 angeordnet sind, erzeugt bei Beleuchtung somit Linien auf dem Sensor 11, deren Lagen durch den wenigstens bezüglich der x-Achse positionssensitiv detektierenden Sensor 11a auf dem Sensor 11 bestimmt werden können. Ändert sich die Neigung der Sensoranordnung 30a in Neigungsrichtung 36 bzw. in der x-z-Ebene, so ändert sich die Lage der einzelnen auf den Sensor 11 projizierten Linien bzw. der Gesamtheit der Linien, woraus der Neigungswert für die Neigungsrichtung 36 abgeleitet werden kann (vgl. Fig. 4b). Diese Bestimmung kann beispielsweise auf der vorgenommenen Kalibrierung basieren und durch Verarbeitung von bekannten Positions- und Ausrichtungswerten erfolgen, die eine relative Position und Ausrichtung des Codeelements 31 zum Sensor 11 angeben.

Zur zuverlässigen Bestimmung des Einfallswinkels α aus der Lage der Projektion des Codemusters 32 auf dem Sensor 11 ist eine Beabstandungskomponente 37 vorgesehen, die den Codeträger 33 in fester und fixierter Position relativ zu dem Sensor 11 hält. Dadurch ist gewährleistet, dass das Codemuster stets in bestimmter und definierter Position und Ausrichtung und mit einem definierten Abstand relativ zu dem Sensor 11 starr vorliegt und in Abhängigkeit von der Neigung der Anordnung 30a das Codemuster 32 mit einem definierten Versatz auf den Sensor 11 projiziert wird. Die Lage der Projektion des Musters auf dem Sensor 11 wird somit bestimmt durch die Neigung der Sensoranordnung 30a in der x-z-Ebene bzw. bezüglich der Neigungsrichtung 36 und durch die Beabstandungskomponente 37.

Der Abstand zwischen Sensor 11 und Codeelement 31 beträgt erfindungsgemäss zwischen 1 mm und 10 mm und ist durch die Beabstandungskomponente 37 vorgegeben.

Fig. 4b zeigt eine Seitenansicht einer weiteren Ausführungsform einer Sensoranordnung 30b einer erfindungsgemässen Reflektoranordnung. Die Sensoranordnung 30b weist einen Zeilensensor 11a (z.B. ausgebildet als CCD-Sensor) und ein Codeelement 41, welches ein Codemuster mit lichtdurchlässigen Spalten unterschiedlicher Breite (Spaltbreite) und mit unterschiedlichen Spaltabständen bereitstellt, auf.

Das Codeelement 41 ist an einem für die Beleuchtungsstrahlung 25 durchlässiger Körper 42 angeordnet. An einer ersten Endseite 42a des Körpers 42 ist der Sensor 11a angeordnet und an einer zweiten Endseite 42b des Körpers 42 das Codeelement 41 vorgesehen. Der Körper 42 ist hierbei ferner derart ausgestaltet, dass eine fixe und starre Positionierung des Codeelements 41 relativ zum Sensor 11a gewährleistet ist, wobei durch diese Anordnung eine grosse Robustheit beispielsweise gegenüber äusseren Einflüssen (z.B. Stösse oder thermische Deformation) bereitgestellt wird. Das Codeelement 41 bzw. Codemuster ist in der gezeigten Ausführung direkt auf dem Körper 42 aufgebracht (Codeelement 41 und Körper 42 sind einstückig ausgebildet), d.h. die das Codemuster bereitstellenden Spalte bzw. Linien sind auf den Körper 42 appliziert (z.B. aufgedruckt oder eingraviert).

Gemäss einer alternativen Ausführung - hier nicht gezeigt - kann das Codeelement 41 als mit dem Codemuster bedruckte Folie auf den Körper aufgebracht, insbesondere mittels Klebstoff aufgeklebt, sein.

Durch die spezifische Ausgestaltung des Körpers 42 ist das Codeelement 41 mit einem bestimmten Abstand d (von 1 mm bis 10 mm) starr mit dem Sensor 11a verbunden. Dieser Abstand d kann durch einen jeweils den gewünschten Anforderungen angepassten Körper 42 eingestellt werden. In Abhängigkeit dieses Abstands d kann ein auf den Sensor 11a projiziertes Schattenwurfbild mit einem Nahfeldbeugungsmuster (Fresnelbeugung) überlagert werden.

Für eine zuverlässige und genaue Auswertung der Projektion des Codemusters auf dem Sensor 11a, wird der Abstand d zwischen Sensor 11a und Codemuster im Speziellen derart gewählt, dass für die Beugung an dem Codeelement 41, bzw. an den einzelnen durch die Linien des Codemusters erzeugten Spalten, Fernfeldbedingungen gelten. Anstelle einer reinen Fresnelbeugung tritt dann Fraunhoferbeugung auf, also eine resultierende Intensitätsverteilung der gebeugten Strahlung auf dem Sensor wie im Unendlichen.

Bei einer alternativen bevorzugten Wahl des Abstands d kann ein ebenfalls geeignetes Beugungsmuster als Beugungsübergang zwischen Fresnel- und Fraunhoferbeugung vorliegen, wobei dann von einem Vorliegen des Zeilensensors 11a relativ zu dem Codemusters 41 in einem Übergangsbereich gesprochen wird.

Ferner wird bei der Gestaltung der Sensoranordnung 30b, insbesondere hinsichtlich der Erzeugung eines gewünschten Beugungsmusters, neben einem geeigneten Abstand d im Besonderen eine passende Ausgestaltung des Codemusters berücksichtigt, d.h. bei einem Liniencode wird die Anordnung und Dimensionierung der lichtdurchlässigen Spalte entsprechend eingestellt (z.B. Spaltabstand im Verhältnis zu Spaltbreite).

Die Beleuchtungsstrahlung 25 trifft im gezeigten Fall gemäss Fig. 4b in einem Einfallswinkel α > 90° auf die Sensoranordnung 30b, wodurch die Linien des Codemusters mit einem gewissen Versatz 43 (bezüglich einer Einstrahlung der Beleuchtungsstrahlung in einem Einfallswinkel α = 90°) auf den Sensor 11a projiziert werden.

Der Zeilensensor 11a ist zumindest bezüglich der x-Richtung zur positionssensitiven Erfassung von elektromagnetischer Strahlung ausgebildet. Die Genauigkeit der Detektion der auf den Sensor 11a auftreffenden Strahlung hängt dabei zumindest vom Auflösevermögen des Sensors und dem resultierenden Beugungsmuster ab, wobei eine präzise Lokalisierung von Intensitätsmustern mit steilen Flanken (wie bei Fresnelbeugung vorliegend) schwieriger und ungenauer zu realisieren ist als eine Lokalisierung von Intensitätsmustern mit flacheren Flanken (wie bei Fraunhoferbeugung oder bei dem beschriebenen Beugungsübergang vorliegend). Die Genauigkeit der Positionsbestimmung der auf dem Sensor 11a auftreffenden Strahlung nimmt also mit Verlassen des Beugungs-Nahbereichs und Erreichen des Übergangsbereichs zu.

Somit kann der Versatz 43 des projizierten Codemusters auf dem Sensor 11a aus der erfassbaren Beleuchtungsstrahlung 25 bestimmt und ein entsprechendes Sensorsignal erzeugt werden. Aus dem bestimmten Versatz 43 bzw. mittels des erzeugten Sensorsignals wiederum ist dann eine Neigung (bezüglich der Neigungsrichtung 36) der Sensoranordnung 30b relativ zur Strahleinfallsrichtung der Beleuchtungsstrahlung 25 ableitbar, d.h. der Einfallswinkel α ist bestimmbar.
Die Fig. 5a und Fig. 5b zeigen eine bestimmte Ausführungsform für ein Codeelement 55 mit einem Codemuster 53 einer Sensoranordnung einer erfindungsgemässen Reflektoranordnung und eine Anordnung des Codeelements 55 zusammen mit einem Zeilensensor 52, auf welchen bei entsprechender Beleuchtung des Codeelements 55 eine Projektion des Codemusters 53 erfolgt. Das Codemuster 53 ist hier für die Beleuchtungsstrahlung lichtundurchlässig gestaltet, jedoch können die optischen Eigenschaften von Codemuster 53 und der das Codemuster 53 umgebenden bzw. definierenden Fläche vertauscht sein.
Das vorgesehene Codemuster 53 weist ein bezüglich der Erstreckungsrichtung E des Codeelements 55 schräges bzw. diagonales Muster (Pattern) mit unterschiedlichen Diagonalrichtungen der einzelnen Musterteile (Streifen) auf. Ein erster Teil des Patterns weist eine Musterausrichtung mit einem ersten Winkel relativ zur Erstreckungsrichtung E auf während ein zweiter Teil eine Musterausrichtung mit einem zweiten, zum ersten Winkel verschiedenen Winkel aufweist.
Mit einem derartigen Codemuster 53 kann durch Beleuchtung nicht nur eine Kippung der Sensoranordnung um eine erste Achse A bestimmt werden, sondern zusätzlich auch eine Drehung um eine zweite Achse B. Es ist damit also eine eindeutige Neigungsbestimmung bezüglich zweier Achsen durchführbar.

Bei einer Kippung um die Achse A verschiebt sich das auf den Zeilensensor 52 projizierte Codemuster 53 in Richtung der Erstreckungsrichtung E. Die entsprechend veränderte Projektion kann mittels des Sensors 52 erfasst und daraus ein Versatz der Projektion und ein Betrag (und eine Richtung) für die Verkippung um die Achse A bestimmt werden.

Bei einer Drehung der Anordnung um die Achse B verschiebt sich das auf den Zeilensensor 52 projizierte Codemuster 53 in einer Richtung orthogonal zur Erstreckungsrichtung E. Die dadurch entsprechend veränderte Projektion kann analog mittels des Sensors 52 erfasst und daraus ein Versatz der Projektion und ein Betrag (und eine Richtung) für die Verdrehung um die Achse B bestimmt werden.

Der jeweilige Versatz der Projektion kann aus der Kombination der jeweils beleuchteten bzw. abgeschatteten Segmente des Zeilensensors 52 abgeleitet werden.

Durch die unterschiedlichen Ausrichtungen des Codemusters ist die gemeinsame Bestimmung für beide Achsen eindeutig. Eine Deckungsgleichheit des projizierten Codemusters bei gleichzeitigem Kippen und Drehen mit einer Projektion, die bei einer alternativen Orientierung der Anordnung entstünde, ist dadurch ausgeschlossen.

Des Weiteren bietet ein derartiges Codemuster 53 insbesondere auch die Vorteile hinsichtlich Genauigkeit wie ein Muster gemäss einer der Figuren 4a-b.

Erfindungsgemäss ist das Codeelement 55 derart starr relativ zu dem Zeilensensor 52 angeordnet, dass die Erstreckungsrichtung E des Codeelements 55 gleichgerichtet, insbesondere parallel, zu der Erstreckungsrichtung des Zeilensensors 52 ist.

Fig. 6 zeigt eine weitere Ausführungsform einer Reflektoranordnung mit einem Retroreflektor 4, der als teildurchlässiges (bezüglich der Strahlung 25) Prisma ausgebildet ist und dadurch einen Teil der Strahlung 25 retro-reflektiert, d.h. in Abhängigkeit der Auftreffposition am Prisma parallel oder koaxial reflektiert, und den restlichen Teil der Strahlung 25 zur Sensoranordnung 10 transmittieren lässt. Mittels der reflektierten Strahlung kann eine Entfernungs- und Positionsbestimmung für die Reflektoranordnung erfolgen. Beispielsweise erfolgt dies nach bekannten Verfahren mit einer Totalstation oder einem Lasertracker, wobei die Strahlung 25 als Messstrahlung, beispielsweise als kollimierte Laserstrahlung, durch die Totalstation bzw. den Lasertracker emittiert wird.

Die Ausführung der Sensoranordnung 10 ist nicht auf die hier gezeigt Variante mit einer Linse 13 beschränkt, sondern kann gemäss einer beliebigen entsprechenden Ausführung der Figuren 2-5b ausgestaltet sein - erfindungsgemäss insbesondere nach einer der Figuren 4a-5b. Ferner kann der Retroreflektor 4 (Prisma) gemäss alternativen Ausführungsformen für retro-reflektierende Elemente (z.B. als retro-reflektierende Folie) ausgeführt sein.

Der durch das Prisma 4 transmittierte Teil der Strahlung 25 beleuchtet die Sensoranordnung 10 derart, dass die Strahlung 25 auf den Sensor 11 geleitet wird und die Lage des so auf dem Sensor erzeugten Strahlflecks (Beleuchtungsmuster bzw. Strahlauftreffbereich) bestimmbar ist. Die bestimmbare Lage repräsentiert gleichzeitig eine jeweilige Neigung der Reflektoranordnung relativ zur Ausbreitungsachse der Strahlung 25 (vgl. Figs. 3a-5b). Mittels des Sensors 11 wird ein die Lage der Projektion (bei Verwendung eines Codeelements anstelle der Linse) oder der Strahlung auf der Detektionsfläche repräsentierendes Signal erzeugt, auf dessen Basis die Neigungsbestimmung erfolgen kann. Hierfür kann die Reflektoranordnung über entsprechende Verarbeitungsmittel zur Neigungsbestimmung verfügen und/oder über Signalübertragungsmittel, durch welche die Lageinformation für die auftreffende Strahlung (bzw. das Signal) oder eine bereits bestimmte Neigung an das strahlemittierende Vermessungsgerät (z.B. Totalstation) übermittelbar ist. Mittels des Vermessungsgeräts kann die bestimmte oder dort zu bestimmende Orientierung (und die Positionsinformation) z.B. für eine Benutzerführung oder eine Messpunktbestimmung entsprechend weiterverarbeitet werden.

Die Strahlung 25 fungiert hierbei sowohl als Messstrahlung für die Positionsbestimmung als auch als Beleuchtungsstrahlung für die Orientierungs- bzw. Neigungsbestimmung.

Eine erfindungsgemässe Reflektoranordnung mit einer Sensoranordnung wie oben ausgeführt - gemäss den Figs. 1-6 - wird im speziellen mit einem Vermessungsgerät verwendet, insbesondere einem Theodoliten, einer Totalstation oder einem Lasertracker. Das Vermessungsgerät weist dabei typischerweise eine eine Stehachse definierende Basis, einen mit der Basis beweglich verbundenen und relativ zur Basis um die Stehachse drehbaren Aufbau, wobei der Aufbau eine Kippachse definiert, und eine mit dem Aufbau beweglich verbundene, um die Kippachse relativ zum Aufbau schwenkbare, insbesondere rotierbare, und zur Aussendung von Messstrahlung vorgesehene Anzieleinheit (insbesondere Fernrohr). Die Kippachse steht im Wesentlichen orthogonal zur Stehachse.

Zudem sind eine Strahlquelle zur Erzeugung von Beleuchtungsstrahlung, insbesondere der Messstrahlung, und eine Winkel- und Entfernungsmessfunktionalität vorgesehen.

Das Vermessungsgerät verfügt über eine Steuerungs- und Verarbeitungseinheit zur Steuerung eines Anzielens der Sensoranordnung und zur Bestimmung einer Position und Neigung der Sensoranordnung. Bei dem Anzielen der Sensoranordnung ist aus einem Zusammenwirken der Beleuchtungsstrahlung, insbesondere der Messstrahlung, und der Sensoranordnung die Neigung der Sensoranordnung relativ zu einer Beleuchtungsrichtung (Achse der Lichteinstrahlung) der Beleuchtungsstrahlung, insbesondere der Messstrahlung, bezüglich wenigstens einer Neigungsrichtung ableitbar.

Die Laserstrahlung, mit der eine Distanz zu einem reflektierenden Ziel bestimmt wird, kann also als Beleuchtungsstrahlung für die Sensoranordnung eingesetzt werden. Alternativ oder zusätzlich kann auch eine zusätzlich vorgesehene Strahlungsquelle für die Emission der Beleuchtungsstrahlung vorgesehen sein.

Es versteht sich, dass diese dargestellten Figuren nur mögliche Ausführungsbeispiele schematisch darstellen. Die verschiedenen Ansätze können erfindungsgemäss ebenso miteinander sowie mit Verfahren zur Neigungs- oder Lagebestimmung eines Objekts und mit Messgeräten des Stands der Technik kombiniert werden. So können die erfindungsgemässen Aspekte insbesondere Anwendung finden in Verbindung mit geodätischen Vermessungsgeräten - wie Totalstationen und Tachymetern - oder industriellen Vermessungsgeräten - wie z.B. Lasertrackern.

## Patentansprüche

1. Reflektoranordnung (1,2) zur Positionsbestimmung und/oder Markierung von Zielpunkten, insbesondere für die industrielle bzw. geodätische Vermessung, mit
• einem Retroreflektor (4,5,6) zur Positionsbestimmung für die Reflektoranordnung (1,2) mittels paralleler, insbesondere koaxialer, Strahlreflexion und
• einer Sensoranordnung (10,10a-b,20a-d,30a-b),
**dadurch gekennzeichnet, dass**
die Sensoranordnung (10,10a-b,20a-d,30a-b) aufweist
• ein Codeelement (31,41,55) mit Codemuster (32,53) und
• einen wenigstens bezüglich eines Wellenlängenbereichs sensitiven Sensor (11,11a,52) mit einer Empfangsrichtung orthogonal zu dessen Detektionsfläche,
wobei das Codeelement (31,41,55) und der Sensor (11,11a,52) mit einem definierten Abstand (d) derart starr verbunden sind, dass mittels des Sensors (11,11a,52) eine bezüglich der Empfangsrichtung winkelabhängige Lage einer Projektion des Codemusters (32,53) auf die Detektionsfläche bestimmbar ist.

2. Reflektoranordnung (1,2) nach Anspruch 1,
**dadurch gekennzeichnet, dass**
die Empfangsrichtung des Sensors (11,11a,52) und eine Erstreckungsrichtung des Codeelements (31,41,55) orthogonal zueinander ausgerichtet sind und der definierte Abstand mindestens 1 mm und maximal 10 mm beträgt, insbesondere wobei eine Erstreckungsrichtung des Sensors (11,11a,52) gleichgerichtet ist zur Erstreckungsrichtung des Codeelements (31,41,55).

3. Reflektoranordnung (1,2) nach Anspruch 1 oder 2,
**dadurch gekennzeichnet, dass**
das Codeelement (31,41,55) Bereiche unterschiedlicher Transmissivität (34a-b) zumindest bezüglich einer optischen Strahlung (25) mit einer Wellenlänge (λ_{B}) aus dem wenigstens einen Wellenlängenbereich aufweist, wobei das Codemuster (32,53) durch die Bereiche unterschiedlicher Transmissivität (34a-b) repräsentiert ist, insbesondere wobei die Bereiche unterschiedlicher Transmissivität ein Linienmuster mit unterschiedlichen Linienabständen und/oder Linienbreiten definieren.

4. Reflektoranordnung (1,2) nach einem der Ansprüche 1 bis 3,
**dadurch gekennzeichnet, dass**
der Sensor (11,11a,52) als Zeilensensor (11a,52) oder Flächensensor ausgebildet ist, insbesondere als CCD oder CMOS.

5. Reflektoranordnung (1,2) nach einem der Ansprüche 1 bis 4,
**dadurch gekennzeichnet, dass**
die Reflektoranordnung (1,2) eine Trägerstruktur aufweist, vermittels derer die Zielpunkte positionsbestimmbar und/oder markierbar sind, wobei der Retroreflektor (4,5,6) und die Sensoranordnung (10,10ab,20a-d,30a-b) von der Trägerstruktur getragen werden und in bekannter Positionsrelation zueinander angeordnet sind.

6. Reflektoranordnung (1,2) nach Anspruch 5,
**dadurch gekennzeichnet, dass**
die Trägerstruktur
• als Messhilfsinstrument, insbesondere als Vermessungsstab oder Tastwerkzeug, ausgebildet ist oder
• als mobiler handhaltbarer Feld-Controller mit einer optischen Anziel- bzw. Markiereinheit für die Positionsbestimmung und/oder Markierung der Zielpunkte ausgebildet ist oder
• eine Aufsetzvorrichtung zur Befestigung der Trägerstruktur an dem Messhilfsinstrument oder dem Feld-Controller aufweist.

7. Reflektoranordnung (1,2) nach einem der Ansprüche 1 bis 6,
**dadurch gekennzeichnet, dass**
die Reflektoranordnung (1,2) zumindest eine weitere Sensoranordnung (10,10a-b,20a-d,30a-b) aufweist, insbesondere getragen durch die Trägerstruktur, wobei die zumindest eine weitere Sensoranordnung (10,10ab,20a-d,30a-b) in einer definierten Ausrichtung und einer definierten Position relativ zur ersten Sensoranordnung (10,10a-b,20a-d,30a-b) zur Bestimmung einer Neigung bezüglich einer weiteren Achse (N,G,R) angeordnet ist.

8. Reflektoranordnung (1,2) nach einem der Ansprüche 1 bis 7,
**dadurch gekennzeichnet, dass**
die Reflektoranordnung (1,2) mehrere Hilfspunkt-Markierungen (22), insbesondere verkörpert durch Leuchtdioden oder Reflektoren, in fixer und bekannter räumlicher Verteilung relativ zueinander aufweist, wobei die Hilfspunkt-Markierungen (22) eine Neigungsbestimmung bezüglich mindestens einer weiteren Achse (N,G) für die Reflektoranordnung (1,2) durch Bildverarbeiten eines Bildes, in dem die Hilfspunkt-Markierungen (22) zumindest teilweise erfasst sind, bereitstellen, insbesondere wobei die Hilfspunkt-Markierungen (22) eine räumliche Orientierungsbestimmung bereitstellen.

9. Reflektoranordnung (1,2) nach einem der Ansprüche 1 bis 8,
**dadurch gekennzeichnet, dass**
die Reflektoranordnung (1,2) eine Inertialmesseinheit (7) zur fortlaufenden Bestimmung einer Orientierung und/oder Neigung der Reflektoranordnung (1,2), insbesondere zur Bestimmung einer Änderung der Position, Orientierung und/oder Neigung, aufweist, insbesondere wobei die Inertialmesseinheit (7) einen Beschleunigungssensor, einen Drehratensensor, einen Neigungssensor und/oder einen Magnetkompass aufweist.

10. Reflektoranordnung (1,2) nach einem der Ansprüche 1 bis 9,
**dadurch gekennzeichnet, dass**
die Reflektoranordnung (1,2) eine Sendeeinheit zur Datenübermittlung aufweist, insbesondere wobei die Sendeeinheit derart ausgebildet ist, dass die Datenübermittlung mittels Aussendung von elektromagnetischer Strahlung, insbesondere von moduliertem Licht, durchführbar ist.

11. Kalibrierverfahren mit einer wenigstens zur Positionsbestimmung und/oder Markierung von Zielpunkten ausgebildeten Reflektoranordnung (1,2) aufweisend
• eine eine Referenz-Sensoranordnung verkörpernde Sensoranordnung (10,10a-b,20a-d,30a-b) und
• eine erste Sensoreinheit,
wobei die Referenz-Sensoranordnung und die erste Sensoreinheit in bekannter Positionsrelation angeordnet sind, mit
• einem Erzeugen von Referenzneigungsdaten bezüglich einer ersten Achse mittels der Referenz-Sensoranordnung (10,10a-b,20a-d,30a-b) und
• einem Kalibrieren der ersten Sensoreinheit bezüglich der ersten Achse basierend auf den Referenzneigungsdaten,
**dadurch gekennzeichnet, dass**
das Erzeugen der Referenzneigungsdaten erfolgt durch
• ein, insbesondere kollimiertes, Beleuchten eines Codeelements (31,41,55) mit Codemuster (32,53) der Sensoranordnung (10,10a-b,20a-d,30a-b) mit einer Beleuchtungsstrahlung,
• ein Empfangen von Beleuchtungsstrahlung mittels eines Sensors der Sensoranordnung (10,10a-b,20a-d,30a-b) unter einem Einfallswinkel (α),
• ein Bestimmen einer bezüglich der Empfangsrichtung winkelabhängigen Lage einer Projektion des Codemusters als Beleuchtungsstrahlungsauftreffbereich auf der Detektionsfläche des Sensors, und
• ein Ableiten der Referenzneigungsdaten aus der Lage des Beleuchtungsstrahlungsauftreffbereichs und einer vorbekannten Einfallsrichtung der Beleuchtungsstrahlung, insbesondere wobei das Kalibrieren der ersten Sensoreinheit in definierten zeitlichen Intervallen erfolgt, insbesondere fortlaufend.

12. Kalibrierverfahren nach Anspruch 11,
**dadurch gekennzeichnet, dass**
• erste Sensordaten mit der ersten Sensoreinheit erzeugt werden, welche die Neigung bezüglich der ersten Achse repräsentieren,
• ein Übereinstimmungsgrad zwischen den ersten Sensordaten und den Referenzneigungsdaten bestimmt wird und
• das Kalibrieren der ersten Sensoreinheit, insbesondere automatisch, in Abhängigkeit von dem Übereinstimmungsgrad erfolgt.

13. Kalibrierverfahren nach Anspruch 11 oder 12,
**dadurch gekennzeichnet, dass**
• eine Neigungsbestimmung mit der erste Sensoreinheit mit einem sich verändernden, insbesondere im zeitlichen Verlauf zunehmenden, Messfehler behaftet ist und
• der Messfehler durch das Kalibrieren der ersten Sensoreinheit kompensiert wird,
insbesondere wobei die erste Sensoreinheit als Inertialmesseinheit (IMU) oder als insbesondere mehrachsiger Neigungssensor ausgebildet ist.

14. Verwendung einer Reflektoranordnung (1,2) gemäss einem der Ansprüche 1 bis 10 zur Positions- und Neigungsbestimmung durch
• ein Bestrahlen des Retroreflektors (4,5,6) mit Messstrahlung (25) und ein Positionsbestimmen für die Reflektoranordnung (1,2) mittels der durch den Retroreflektor (4,5,6)) reflektierten Messstrahlung (25),
• ein, insbesondere kollimiertes Beleuchten der Sensoranordnung (10,10a-b,20a-d,30a-b), wobei durch eine Ausrichtung der Beleuchtungsachse relativ zur Erfassungsrichtung des Sensors der Sensoranordnung (10,10a-b,20a-d,30a-b) ein Einfallswinkel (α) definiert ist,
• ein bezüglich der Lage auf der Detektionsfläche des Sensors (11,11a,52) positionssensitives Erfassen eines bei dem Beleuchten erzeugten Strahlauftreffmusters, insbesondere des Beleuchtungsquerschnitts oder der Projektion des Codemusters, auf dem Sensor (11,11a,52) und
• ein Ableiten einer Neigung der Reflektoranordnung (1,2) bezüglich mindestens der Beleuchtungsachse aus der mittels des positionssensitiven Erfassens bestimmbaren Lage des Strahlauftreffmusters auf der Detektionsfläche, wobei die Lage des Strahlauftreffmusters vom Einfallswinkel (α) abhängt.

15. Computerprogrammprodukt, das auf einem maschinenlesbaren Träger gespeichert ist, zur Steuerung bzw. Ausführung eines Kalibrierverfahrens nach einem der Ansprüche 11 bis 13, insbesondere wenn das Computerprogrammprodukt auf einer Steuerungs- und Verarbeitungseinheit eines Vermessungsgeräts, insbesondere Totalstation, Theodolit oder Lasertracker, ausgeführt wird.

## Claims

1. Reflector arrangement (1,2) for position determination and/or marking of target points, in particular for industrial or geodetic surveying, having
• a retroreflector (4, 5, 6) for position determination for the reflector arrangement (1, 2) using parallel, in particular coaxial, beam reflection and
• a sensor arrangement (10,10a-b,20a-d,30a-b),
**characterized in that**
the sensor arrangement (10,10a-b,20a-d,30a-b) has
• a code element (31,41,55) with a code pattern (32,53) and
• a sensor (11, 11a, 52) which is sensitive with respect to at least one wavelength range, with a reception direction that is orthogonal to the detection surface thereof,
wherein the code element (31, 41, 55) and the sensor (11, 11a, 52) are rigidly connected, with a defined spacing (d), such that it is possible using the sensor (11, 11a, 52) to determine a location, which is angle-dependent with respect to the reception direction, of a projection of the code pattern (32, 52) onto the detection surface.

2. Reflector arrangement (1,2) according to Claim 1,
**characterized in that**
the reception direction of the sensor (11, 11a, 52) and an extension direction of the code element (31, 41, 55) are aligned to be mutually orthogonal, and the defined spacing is at least 1 mm and at most 10 mm, in particular wherein an extension direction of the sensor (11, 11a, 52) is aligned to be equal to the extension direction of the code element (31, 41, 55).

3. Reflector arrangement (1,2) according to Claim 1 or 2,
**characterized in that**
the code element (31,41,55) has regions of different transmissivity (34a-b) at least with respect to optical radiation (25) having a wavelength (λ_{B}) from the at least one wavelength range, wherein the code pattern (32,53) is represented by the regions of different transmissivity (34a-b), in particular wherein the regions of different transmissivity define a line pattern having different line spacings and/or line widths.

4. Reflector arrangement (1,2) according to any one of Claims 1 to 3,
**characterized in that**
the sensor (11,11a,52) is configured as a line sensor (11a,52) or an area sensor, in particular as a CCD or CMOS.

5. Reflector arrangement (1,2) according to any one of Claims 1 to 4,
**characterized in that**
the reflector arrangement (1,2) has a carrier structure, using which the target points can be positionally determined and/or marked, wherein the retroreflector (4, 5, 6) and the sensor arrangement (10, 10a-b, 20a-d, 30a-b) are carried by the carrier structure and are arranged in a known positional relation with respect to one another.

6. Reflector arrangement (1,2) according to Claim 5,
**characterized in that**
the carrier structure
• is configured as an auxiliary measuring instrument, in particular as a surveying pole or probing tool, or
• is configured as a mobile portable field controller with an optical targeting or marking unit for the position determination and/or marking of the target points, or
• has an add-on apparatus for securing the carrier structure on the auxiliary measuring instrument or the field controller.

7. Reflector arrangement (1,2) according to any one of Claims 1 to 6,
**characterized in that**
the reflector arrangement (1, 2) has at least one further sensor arrangement (10, 10a-b, 20a-d, 30a-b), in particular carried by the carrier structure, wherein the at least one further sensor arrangement (10, 10a-b, 20a-d, 30a-b) is arranged in a defined alignment and a defined position in relation to the first sensor arrangement (10, 10a-b, 20a-d, 30a-b) for determination of an inclination with respect to a further axis (N, G, R) .

8. Reflector arrangement (1,2) according to any one of Claims 1 to 7,
**characterized in that**
the reflector arrangement (1,2) has a plurality of auxiliary point markings (22), in particular embodied by light-emitting diodes or reflectors, in a specified and known spatial distribution relative to one another, wherein the auxiliary point markings (22) provide an inclination determination with respect to at least one further axis (N, G) for the reflector arrangement (1, 2) by image processing of an image in which the auxiliary point markings (22) are at least partially captured, in particular wherein the auxiliary point markings (22) provide a spatial orientation determination.

9. Reflector arrangement (1,2) according to any one of Claims 1 to 8,
**characterized in that**
the reflector arrangement (1,2) has an inertial measuring unit (7) for continuous determination of an orientation and/or inclination of the reflector arrangement (1, 2), in particular for the determination of a change in the position, orientation and/or inclination, in particular wherein the inertial measuring unit (7) has an accelerometer, a rotation rate sensor, an inclination sensor and/or a magnetic compass.

10. Reflector arrangement (1,2) according to any one of Claims 1 to 9,
**characterized in that**
the reflector arrangement (1,2) has a transmitting unit for data transmission, in particular wherein the transmitting unit is configured such that the data transmission can be carried out by way of emitting electromagnetic radiation, in particular modulated light.

11. Calibration method having a reflector arrangement (1, 2), which is configured at least for position determination and/or marking of target points, having
• a sensor arrangement (10,10a-b,20a-d,30a-b) which embodies a reference sensor arrangement, and
• a first sensor unit,
wherein the reference sensor arrangement and the first sensor unit are arranged in known positional relation, with
• generation of reference inclination data with respect to a first axis by way of the reference sensor arrangement (10,10a-b,20a-d,30a-b) and
• calibration of the first sensor unit with respect to the first axis on the basis of the reference inclination data,
**characterized in that**
the generation of the reference inclination data takes place by way of
• illuminating, particularly collimated illuminating, a code element (31,41,55) with a code pattern (32,53) of the sensor arrangement (10, 10a-b, 20a-d, 30a-b) with an illumination radiation,
• receiving illumination radiation by means of a sensor of the sensor arrangement (10, 10a-b, 20a-d, 30a-b) at an angle of incidence (α),
• determining an angle-dependent location of a projection of the code pattern as an illumination radiation incidence region on the detection surface of the sensor, and
• deriving the reference inclination data from the location of the illumination radiation incidence region and a previously known incidence direction of the illumination radiation,
in particular wherein the calibration of the first sensor unit takes place at defined temporal intervals, in particular continuously.

12. Calibration method according to Claim 11, **characterized in that**
• the first sensor unit is used to generate first sensor data which represent the inclination with respect to the first axis,
• a degree to which the first sensor data and the reference inclination data match is determined and
• calibration of the first sensor unit is effected in dependence on the degree of the matching, in particular automatically.

13. Calibration method according to Claim 11 or 12, **characterized in that**
• an inclination determination using the first sensor unit involves a changing measurement error, in particular which increases in the temporal progression, and
• the measurement error is compensated for by calibrating the first sensor unit,
in particular wherein the first sensor unit is configured as an inertial measuring unit (IMU) or as in particular a multi-axis inclination sensor.

14. Use of a reflector arrangement (1,2) according to any one of Claims 1 to 10 for position and inclination determination by
• irradiating the retroreflector (4, 5, 6) with measurement radiation (25) and by positionally determining the reflector arrangement (1, 2) by way of the measurement radiation (25) reflected by the retroreflector (4, 5, 6),
• illuminating, in particular in a collimated manner, the sensor arrangement (10,10a-b,20a-d,30a-b), wherein an angle of incidence (α) is defined by an alignment of the illumination axis in relation to the capturing direction of the sensor of the sensor arrangement (10,10a-b,20a-d,30a-b),
• position-sensitive capturing, with respect to the location on the detection surface of the sensor (11, 11a, 52), of a beam incidence pattern produced during illumination, in particular of the illumination cross section or the projection of the code pattern, on the sensor (11, 11a, 52), and
• deriving an inclination of the reflector arrangement (1, 2) with respect to at least the illumination axis from the location, which can be determined by way of the position-sensitive capturing, of the beam incidence pattern on the detection surface, wherein the location of the beam incidence pattern is dependent on the angle of incidence (α).

15. Computer program product stored on a machine-readable carrier, for controlling or executing a calibration method according to any one of Claims 11 to 13, in particular if the computer program product is executed on a controlling and processing unit of a surveying system, in particular total station, theodolite or laser tracker.

## Revendications

1. Dispositif réflecteur (1, 2) pour la détermination de la position et/ou le marquage de points cibles, notamment pour la topométrie industrielle ou géodésique, comprenant
• un rétroréflecteur (4, 5, 6) destiné à déterminer la position du dispositif réflecteur (1, 2) au moyen d'une réflexion parallèle, notamment coaxiale, de faisceau, et
• un dispositif capteur (10, 10a-b, 20a-d, 30a-b),
**caractérisé en ce que** le dispositif capteur (10, 10a-b, 20a-d, 30a-b) présente
• un élément de code (31, 41, 55) doté d'un motif de code (32, 53), et
• un capteur (11, 11a, 52) sensible au moins dans un domaine de longueur d'onde et possédant une direction de réception orthogonale à sa surface de détection,
l'élément de code (31, 41, 55) et le capteur (11, 11a, 52) étant fixés de manière rigide selon une distance définie (d), de manière que le capteur (11, 11a, 52) puisse déterminer l'emplacement d'une projection du motif de code (32, 53) sur la surface de détection, ledit emplacement dépendant de l'angle par rapport à la direction de réception.

2. Dispositif réflecteur (1, 2) selon la revendication 1,
**caractérisé en ce que**
la direction de réception du capteur (11, 11a, 52) est orthogonale à une direction d'extension de l'élément de code (31, 41, 55) et la distance définie est d'au moins 1 mm et d'au plus 10 mm, une direction d'extension du capteur (11, 11a, 52) étant notamment identique à la direction d'extension de l'élément de code (31, 41, 55).

3. Dispositif réflecteur (1, 2) selon la revendication 1 ou 2,
**caractérisé en ce que**
l'élément de code (31, 41, 55) présente des domaines de différentes transmittances (34a-b) au moins vis-à-vis d'un rayonnement optique (25) de longueur d'onde (λ_{B}) appartenant à l'au moins un domaine de longueur d'onde, le motif de code (32, 53) étant représenté par les domaines de différentes transmittances (34a-b), les domaines de différentes transmittances définissant notamment un motif de lignes présentant différents écarts entre les lignes et/ou différentes épaisseurs de ligne.

4. Dispositif réflecteur (1, 2) selon l'une des revendications 1 à 3,
**caractérisé en ce que**
le capteur (11, 11a, 52) est un capteur de ligne (11a, 52) ou un capteur de surface, notamment CCD ou CMOS.

5. Dispositif réflecteur (1, 2) selon l'une des revendications 1 à 4,
**caractérisé en ce que**
le dispositif réflecteur (1, 2) présente une structure porteuse, au moyen de laquelle il est possible de déterminer la position et/ou de marquer des points cibles, le rétroréflecteur (4, 5, 6) et le dispositif capteur (10, 10a-b, 20a-d, 30a-b) étant portés par la structure porteuse et présentant un positionnement mutuel connu.

6. Dispositif réflecteur (1, 2) selon la revendication 5,
**caractérisé en ce que**
la structure porteuse
• constitue un instrument auxiliaire de mesure, notamment une tige de mesure ou un outil de palpage, ou
• constitue un contrôleur de terrain mobile portable doté d'une unité optique de visée ou de marquage destinée à déterminer la position et/ou à marquer des points cibles, ou
• possède un système d'attache destiné à fixer la structure porteuse sur l'instrument auxiliaire de mesure ou sur le contrôleur de terrain.

7. Dispositif réflecteur (1, 2) selon l'une des revendications 1 à 6,
**caractérisé en ce que**
le dispositif réflecteur (1, 2) présente au moins un dispositif capteur (10, 10a-b, 20a-d, 30a-b) supplémentaire, notamment porté par la structure porteuse, l'au moins un dispositif capteur (10, 10a-b, 20a-d, 30a-b) supplémentaire étant disposé selon une orientation et une position définies par rapport au premier dispositif capteur (10, 10a-b, 20a-d, 30a-b) afin de déterminer une inclinaison par rapport à un axe (N, G, R) supplémentaire.

8. Dispositif réflecteur (1, 2) selon l'une des revendications 1 à 7,
**caractérisé en ce que**
le dispositif réflecteur (1, 2) présente plusieurs marquages de points auxiliaires (22), notamment matérialisés par des diodes électroluminescentes ou des réflecteurs répartis les uns par rapport aux autres de manière fixe et connue dans l'espace, les marquages de points auxiliaires (22) fournissant une détermination de l'inclinaison du dispositif réflecteur (1, 2) par rapport à au moins un axe (N, G) supplémentaire, par traitement d'une image dans laquelle les marquages de points auxiliaires (22) sont captés au moins partiellement, lesdits marquages de points auxiliaires (22) fournissant notamment une détermination de l'orientation dans l'espace.

9. Dispositif réflecteur (1, 2) selon l'une des revendications 1 à 8,
**caractérisé en ce que**
le dispositif réflecteur (1, 2) présente une centrale inertielle (7) destinée à déterminer en continu une orientation et/ou une inclinaison du dispositif réflecteur (1, 2), notamment une modification de la position, de l'orientation et/ou de l'inclinaison, la centrale inertielle (7) présentant notamment un accéléromètre, un gyromètre, un inclinomètre et/ou un compas magnétique.

10. Dispositif réflecteur (1, 2) selon l'une des revendications 1 à 9,
**caractérisé en ce que**
le dispositif réflecteur (1, 2) présente un émetteur destiné à transmettre des données, l'émetteur étant notamment conçu de manière à pouvoir transmettre les données par émission d'un rayonnement électromagnétique, notamment de lumière modulée.

11. Procédé d'étalonnage au moyen d'un dispositif réflecteur (1, 2) conçu au moins pour la détermination de la position et/ou le marquage de points cibles et présentant
• un dispositif capteur (10, 10a-b, 20a-d, 30a-b) matérialisant un dispositif capteur de référence, et
• une première unité de capteur,
le dispositif capteur de référence et la première unité de capteur présentant un positionnement mutuel connu, ledit procédé comportant les étapes suivantes :
• obtention de données d'inclinaison de référence par rapport à un premier axe au moyen du dispositif capteur de référence (10, 10a-b, 20a-d, 30a-b), et
• étalonnage de la première unité de capteur par rapport au premier axe et à partir des données d'inclinaison de référence,
**caractérisé en ce que**
les données d'inclinaison de référence sont obtenues par
• éclairage, notamment collimaté, d'un élément de code (31, 41, 55) doté d'un motif de code (32, 53) du dispositif capteur (10, 10a-b, 20a-d, 30a-b), au moyen d'un rayonnement d'éclairage,
• réception du rayonnement d'éclairage par un capteur du dispositif capteur (10, 10a-b, 20a-d, 30a-b) selon un angle d'incidence (α),
• détermination de l'emplacement d'une projection du motif de code en tant que zone d'incidence du rayonnement d'éclairage sur la surface de détection du capteur, ledit emplacement dépendant de l'angle par rapport à la direction de réception, et
• déduction des données d'inclinaison de référence à partir de l'emplacement de la zone d'incidence du rayonnement d'éclairage et d'une direction d'incidence préalablement connue du rayonnement d'éclairage,
la première unité de capteur étant notamment étalonnée à des intervalles temporels définis, notamment en continu.

12. Procédé d'étalonnage selon la revendication 11,
**caractérisé en ce que**
• la première unité de capteur produit des premières données de capteur qui représentent l'inclinaison par rapport au premier axe,
• il est déterminé un degré de coïncidence entre les premières données de capteur et les données d'inclinaison de référence, et
• la première unité de capteur est étalonnée en fonction du degré de coïncidence, notamment de manière automatique.

13. Procédé d'étalonnage selon la revendication 11 ou 12,
**caractérisé en ce que**
• la détermination de l'inclinaison par la première unité de capteur est altérée par une erreur de mesure variable, notamment croissante avec le temps, et
• l'erreur de mesure est compensée par l'étalonnage de la première unité de capteur,
la première unité de capteur constituant notamment une centrale inertielle (IMU, inertial measurement unit) ou un inclinomètre, notamment pluriaxial.

14. Utilisation d'un dispositif réflecteur (1, 2) selon l'une des revendications 1 à 10 en vue de déterminer une position et une inclinaison, au moyen des étapes suivantes :
• éclairage du rétroréflecteur (4, 5, 6) au moyen d'un rayonnement de mesure (25) et détermination de la position du dispositif rétroréflecteur (1, 2) au moyen du rayonnement de mesure (25) réfléchi par le rétroréflecteur (4, 5, 6),
• éclairage, notamment collimaté, du dispositif capteur (10, 10a-b, 20a-d, 30a-b), un angle d'incidence (α) étant défini par l'orientation de l'axe d'éclairage par rapport à la direction de captage du capteur du dispositif capteur (10, 10a-b, 20a-d, 30a-b),
• captage d'un motif d'incidence du rayonnement provenant de l'éclairage, notamment captage de la coupe transversale de l'éclairage ou de la projection du motif de code, sur le capteur (11, 11a, 52), ledit captage étant sensible à la position par rapport à l'emplacement sur la surface de détection du capteur (11, 11a, 52), et
• déduction de l'inclinaison du dispositif réflecteur (1, 2) au moins par rapport à l'axe d'éclairage, à partir de l'emplacement du motif d'incidence du rayonnement sur la surface de détection, ledit emplacement pouvant être déterminé au moyen du captage sensible à la position et dépendant de l'angle d'incidence (α).

15. Produit programme d'ordinateur enregistré sur un support lisible par une machine, destiné à commander ou à exécuter un procédé d'étalonnage selon l'une des revendications 11 à 13, notamment lorsque le produit programme d'ordinateur est exécuté sur une unité de commande et de traitement d'un appareil de topométrie, notamment d'une station totale, d'un théodolite ou d'un laser de relevé.
